# EUROPEAN PATENT APPLICATION

(11) **EP 4 492 850 A1**
(43) Date of publication of application: **15.01.2025**
(21) Application number: 23766050.1
(22) Date of filing: 08.03.2023
(51) Int. Cl.: H04W 24/02

(54) **SERVICE PROCESSING METHOD, APPARATUS, COMMUNICATION DEVICE AND READABLE STORAGE MEDIUM**

(30) Priority: 11.03.2022 CN 202210252544
(71) Applicant: VIVO MOBILE COMMUNICATION CO., LTD., Dongguan, Guangdong 523863 (CN)
(72) Inventor: KE, Xiaowan, Dongguan, Guangdong 523863 (CN)
(74) Representative: Conti, Marco
(86) International application number: PCT/CN2023/080316
(87) International publication number: WO 2023/169473

(57) **Abstract**

This application discloses a service processing method and apparatus, a communication device, and a readable storage medium. The service processing method in embodiments of this application includes: obtaining, by a first communication device, coordination configuration information; and performing a first operation based on the coordination configuration information; where the coordination configuration information includes at least one of the following: coordination configuration information of a first tunnel, coordination configuration information of a second tunnel, and coordination configuration information of a first tunnel group; the coordination configuration information of the first tunnel includes at least one of the following: an identifier of the first tunnel, a QoS parameter of the first tunnel, information of the second tunnel, first indication information, and a time difference interval for approximate time scheduling; and the first operation includes at least one of the following: determining a radio bearer for a tunnel; determining an association relationship of a radio bearer; performing approximate time scheduling on data in an associated radio bearer; and requesting approximate time scheduling on data in an associated radio bearer.

## Description

### CROSS-REFERENCE TO RELATED APPLICATIONS

This application claims priority to Chinese Patent Application No. 202210252544.1, filed in China on March 11, 2022, which is incorporated herein by reference in its entirety.

### TECHNICAL FIELD

This application pertains to the field of communication technologies, and specifically relates to a service processing method and apparatus, a communication device, and a readable storage medium.

### BACKGROUND

In the existing networks, for media services such as extended reality (Extended Reality, XR), multimodal service data requires coordination of approximate time scheduling and quality of service (Quality of Service, QoS) policies. In this case, how to support the coordination of multiple data flows (such as multimodal service data flows) is an urgent problem to be solved at present.

### SUMMARY

Embodiments of this application provide a service processing method and apparatus, a communication device, and a readable storage medium, which can solve the problem of how to support the coordination of multiple data flows (such as multimodal service data flows).

To resolve the foregoing technical problem, this application is implemented as follows.

According to a first aspect, a service processing method is provided, including:
obtaining, by a first communication device, coordination configuration information, where the coordination configuration information includes at least one of the following: coordination configuration information of a first tunnel, coordination configuration information of a second tunnel, and coordination configuration information of a first tunnel group; and
performing, by the first communication device, a first operation based on the coordination configuration information; where
the coordination configuration information of the first tunnel includes at least one of the following: an identifier of the first tunnel, a quality of service QoS parameter of the first tunnel, information of the second tunnel, first indication information, and a time difference interval for approximate time scheduling; and
the first indication information is used to indicate at least one of the following: mapping different radio bearers for the first tunnel and the second tunnel, mapping an independent radio bearer for the first tunnel, and requiring approximate time scheduling for the first tunnel and the second tunnel;
the coordination configuration information of the first tunnel group includes at least one of the following:
   identifier information of the first tunnel group, or a list composed of respective tunnel identification information of all tunnels in the first tunnel group;
   second indication information, where the second indication information is used to indicate at least one of the following: mapping an independent radio bearer for a data flow in the first tunnel group, mapping an independent radio bearer for a tunnel in the first tunnel group, and requiring approximate time scheduling for a tunnel in the first tunnel group;
   a time difference interval for approximate time scheduling; and
   a list composed of information of a third tunnel; where
   the second tunnel is one of the following: a tunnel associated with the first tunnel, and a tunnel that requires approximate time scheduling together with the first tunnel; and
   the third tunnel is a tunnel included in the first tunnel group; and
   the first operation includes at least one of the following:
      determining a radio bearer for a tunnel;
      determining an association relationship of a radio bearer;
      performing approximate time scheduling on data in an associated radio bearer;
      requesting approximate time scheduling on data in an associated radio bearer; and
      sending first information, where the first information includes at least one of the following: coordination configuration information of the first radio bearer, and coordination configuration information of a first radio bearer group.

According to a second aspect, a service processing method is provided, including:
obtaining, by a second communication device, second information, where the second information includes at least one of the following: a first request message, and first request information; and
performing, by the second communication device, a second operation based on the second information; where
the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group; and
the first request information includes at least one of the following: coordination requirement information of a first data flow, and coordination requirement information of a first data flow group;
the coordination requirement information of the first data flow includes at least one of the following:
   description information of the first data flow;
   information of a terminal to which the first data flow corresponds;
   a QoS parameter requested by the first data flow;
   information of the second data flow;
   a time difference interval for approximate time scheduling between the first data flow and the second data flow;
   sixth indication information, where the sixth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow; and
   the coordination requirement information of the first data flow group includes at least one of the following:
      identifier information of the first data flow group, or a list composed of respective data flow identification information of all data flows in the first data flow group;
      seventh indication information, where the seventh indication information is used to indicate at least one of the following: mapping an independent tunnel for a data flow in the first data flow group, mapping an independent QoS policy for a data flow in the first data flow group, and performing approximate time scheduling for a data flow in the first data flow group;
      a list composed of information of a third data flow; and
      a time difference interval for approximate time scheduling for a data flow in the first data flow group; where
      the second data flow is a data flow associated with the first data flow; and
      the third data flow is a data flow included in the first data flow group; and
      the second operation includes at least one of the following:
         determining a QoS policy for a data flow;
         mapping a first QoS policy group for the first data flow group; and
         sending third information, where the third information includes at least one of the following: a first QoS policy, and a first QoS policy group.

According to a third aspect, a service processing method is provided, including:
obtaining, by a third communication device, third information, where the third information includes at least one of the following: a first QoS policy, and a first QoS policy group; and
performing, by the third communication device, a third operation based on the third information; where
the first QoS policy includes at least one of the following: an identifier of the first QoS policy; a QoS parameter of the first QoS policy, information of a second QoS policy, information of a second data flow, eighth indication information, and a time difference interval for approximate time scheduling; where the eighth indication information is used to indicate at least one of the following: mapping different tunnels for the first QoS policy and the second QoS policy, and mapping an independent tunnel for the first QoS policy;
information of the first QoS policy group includes at least one of the following:
   identifier information of the first QoS policy group, or a list composed of respective QoS policy identification information of all QoS policies in the first QoS policy group;
   ninth indication information, where the ninth indication information is used to indicate at least one of the following: mapping an independent tunnel for a data flow in the first QoS policy group, mapping an independent tunnel for a QoS policy in the first QoS policy group, performing approximate time scheduling for a data flow in the first QoS policy group, and requiring approximate time scheduling for a QoS policy in the first QoS policy group;
   a time difference interval for approximate time scheduling; and
   a list composed of information of a third QoS policy; where
   the second QoS policy is a QoS policy associated with the first QoS policy;
   the third QoS policy is a QoS policy included in the first QoS policy group;
   the second data flow is a data flow on which the first data flow depends; and
   the third operation includes at least one of the following:
      determining a tunnel for a data flow;
      determining a tunnel for a QoS policy;
      determining an association relationship of a tunnel;
      sending coordination configuration information, where the coordination configuration information includes at least one of the following: coordination configuration information of a first tunnel, coordination configuration information of a second tunnel, and coordination configuration information of a first tunnel group.

According to a fourth aspect, a service processing method is provided, including:
sending, by a fourth communication device, second information; where
the second information includes at least one of the following: a first request message, and first request information;
the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group; and
the first request information includes at least one of the following: coordination requirement information of a first data flow, and coordination requirement information of a first data flow group; where
the coordination requirement information of the first data flow includes at least one of the following:
   description information of the first data flow;
   information of a terminal to which the first data flow corresponds;
   a QoS parameter requested by the first data flow;
   information of the second data flow;
   a time difference interval for approximate time scheduling between the first data flow and the second data flow;
   fourth indication information, where the fourth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow; and
   the coordination requirement information of the first data flow group includes at least one of the following:
      identifier information of the first data flow group, or a list composed of respective data flow identification information of all data flows in the first data flow group;
      fifth indication information, where the fifth indication information is used to indicate at least one of the following: mapping an independent tunnel for a data flow in the first data flow group, mapping an independent QoS policy for a data flow in the first data flow group, and performing approximate time scheduling for a data flow in the first data flow group;
      a list composed of information of a third data flow; and
      a time difference interval for approximate time scheduling for a data flow in the first data flow group; where
      the second data flow is a data flow associated with the first data flow; and
      the third data flow is a data flow included in the first data flow group.

According to a fifth aspect, a service processing method is provided, including:
obtaining, by a fifth communication device, first information, where the first information includes at least one of the following: coordination configuration information of a first radio bearer, and coordination configuration information of a first radio bearer group; and
performing, by the fifth communication device, a fifth operation based on the first information; where
the coordination configuration information of the first radio bearer includes at least one of the following: an identifier of the first radio bearer, information of a second radio bearer, third indication information, and a time difference interval for approximate time scheduling; where the third indication information is used to indicate at least one of the following: requiring approximate time scheduling for the first radio bearer and the second radio bearer;
the coordination configuration information of the first radio bearer group includes at least one of the following:
   identifier information of the first radio bearer group, or a list composed of respective radio bearer identification information of all radio bearers in the first radio bearer group;
   information of a first tunnel group mapped by the first radio bearer group;
   fourth indication information, where the fourth indication information is used to indicate at least one of the following: a radio bearer in the first radio bearer group that requires approximate time scheduling;
   a time difference interval for approximate time scheduling; and
   information of a third radio bearer; where
   the second radio bearer is one of the following: a radio bearer associated with the first radio bearer, and a radio bearer that requires approximate time scheduling together with the first radio bearer; and
   the third radio bearer is any radio bearer mapped by the first radio bearer group; and
   the fifth operation includes at least one of the following:
      requesting approximate time scheduling on data in an associated radio bearer;
      adding information of the first tunnel group to which a radio bearer is mapped to a header of a data packet in the radio bearer; and
      adding information of the first radio bearer group to which a radio bearer corresponds to a header of a data packet in the radio bearer.

According to a sixth aspect, a service processing apparatus is provided, applied to a first communication device, including:
a first obtaining module, configured to obtain coordination configuration information, where the coordination configuration information includes at least one of the following: coordination configuration information of a first tunnel, coordination configuration information of a second tunnel, and coordination configuration information of a first tunnel group; and
a first execution module, configured to perform a first operation based on the coordination configuration information; where
the coordination configuration information of the first tunnel includes at least one of the following: an identifier of the first tunnel, a quality of service QoS parameter of the first tunnel, information of the second tunnel, first indication information, and a time difference interval for approximate time scheduling; and
the first indication information is used to indicate at least one of the following: mapping different radio bearers for the first tunnel and the second tunnel, mapping an independent radio bearer for the first tunnel, and requiring approximate time scheduling for the first tunnel and the second tunnel;
the coordination configuration information of the first tunnel group includes at least one of the following:
   identifier information of the first tunnel group, or a list composed of respective tunnel identification information of all tunnels in the first tunnel group;
   second indication information, where the second indication information is used to indicate at least one of the following: mapping an independent radio bearer for a data flow in the first tunnel group, mapping an independent radio bearer for a tunnel in the first tunnel group, and requiring approximate time scheduling for a tunnel in the first tunnel group;
   a time difference interval for approximate time scheduling; and
   a list composed of information of a third tunnel; where
   the second tunnel is one of the following: a tunnel associated with the first tunnel, and a tunnel that requires approximate time scheduling together with the first tunnel; and
   the third tunnel is a tunnel included in the first tunnel group; and
   the first operation includes at least one of the following:
      determining a radio bearer for a tunnel;
      determining an association relationship of a radio bearer;
      performing approximate time scheduling on data in an associated radio bearer;
      requesting approximate time scheduling on data in an associated radio bearer; and
      sending first information, where the first information includes at least one of the following: coordination configuration information of the first radio bearer, and coordination configuration information of a first radio bearer group.

According to a seventh aspect, a service processing apparatus is provided, applied to a second communication device, including:
a second obtaining module, configured to obtain second information, where the second information includes at least one of the following: a first request message, and first request information; and
a second execution module, configured to perform a second operation based on the second information; where
the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group; and
the first request information includes at least one of the following: coordination requirement information of a first data flow, and coordination requirement information of a first data flow group;
the coordination requirement information of the first data flow includes at least one of the following:
   description information of the first data flow;
   information of a terminal to which the first data flow corresponds;
   a QoS parameter requested by the first data flow;
   information of the second data flow;
   a time difference interval for approximate time scheduling between the first data flow and the second data flow;
   sixth indication information, where the sixth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow; and
   the coordination requirement information of the first data flow group includes at least one of the following:
      identifier information of the first data flow group, or a list composed of respective data flow identification information of all data flows in the first data flow group;
      seventh indication information, where the seventh indication information is used to indicate at least one of the following: mapping an independent tunnel for a data flow in the first data flow group, mapping an independent QoS policy for a data flow in the first data flow group, and performing approximate time scheduling for a data flow in the first data flow group;
      a list composed of information of a third data flow; and
      a time difference interval for approximate time scheduling for a data flow in the first data flow group; where
      the second data flow is a data flow associated with the first data flow; and
      the third data flow is a data flow included in the first data flow group; and
      the second operation includes at least one of the following:
         determining a QoS policy for a data flow;
         mapping a first QoS policy group for the first data flow group; and
         sending third information, where the third information includes at least one of the following: a first QoS policy, and a first QoS policy group.

According to an eighth aspect, a service processing apparatus is provided, applied to a third communication device, including:
a third obtaining module, configured to obtain third information, where the third information includes at least one of the following: a first QoS policy, and a first QoS policy group; and
a third execution module, configured to perform a third operation based on the third information; where
the first QoS policy includes at least one of the following: an identifier of the first QoS policy; a QoS parameter of the first QoS policy, information of a second QoS policy, information of a second data flow, eighth indication information, and a time difference interval for approximate time scheduling; where the eighth indication information is used to indicate at least one of the following: mapping different tunnels for the first QoS policy and the second QoS policy, and mapping an independent tunnel for the first QoS policy;
information of the first QoS policy group includes at least one of the following:
   identifier information of the first QoS policy group, or a list composed of respective QoS policy identification information of all QoS policies in the first QoS policy group;
   ninth indication information, where the ninth indication information is used to indicate at least one of the following: mapping an independent tunnel for a data flow in the first QoS policy group, mapping an independent tunnel for a QoS policy in the first QoS policy group, performing approximate time scheduling for a data flow in the first QoS policy group, and requiring approximate time scheduling for a QoS policy in the first QoS policy group;
   a time difference interval for approximate time scheduling; and
   a list composed of information of a third QoS policy; where
   the second QoS policy is a QoS policy associated with the first QoS policy;
   the third QoS policy is a QoS policy included in the first QoS policy group;
   the second data flow is a data flow on which the first data flow depends; and
   the third operation includes at least one of the following:
      determining a tunnel for a data flow;
      determining a tunnel for a QoS policy;
      determining an association relationship of a tunnel;
      sending coordination configuration information, where the coordination configuration information includes at least one of the following: coordination configuration information of a first tunnel, coordination configuration information of a second tunnel, and coordination configuration information of a first tunnel group.

According to a ninth aspect, a service processing apparatus is provided, applied to a fourth communication device, including:
a sending module, configured to send second information; where
the second information includes at least one of the following: a first request message, and first request information;
the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group; and
the first request information includes at least one of the following: coordination requirement information of a first data flow, and coordination requirement information of a first data flow group; where
the coordination requirement information of the first data flow includes at least one of the following:
   description information of the first data flow;
   information of a terminal to which the first data flow corresponds;
   a QoS parameter requested by the first data flow;
   information of the second data flow;
   a time difference interval for approximate time scheduling between the first data flow and the second data flow;
   fourth indication information, where the fourth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow; and
   the coordination requirement information of the first data flow group includes at least one of the following:
      identifier information of the first data flow group, or a list composed of respective data flow identification information of all data flows in the first data flow group;
      fifth indication information, where the fifth indication information is used to indicate at least one of the following: mapping an independent tunnel for a data flow in the first data flow group, mapping an independent QoS policy for a data flow in the first data flow group, and performing approximate time scheduling for a data flow in the first data flow group;
      a list composed of information of a third data flow; and
      a time difference interval for approximate time scheduling for a data flow in the first data flow group; where
      the second data flow is a data flow associated with the first data flow; and
      the third data flow is a data flow included in the first data flow group.

According to a tenth aspect, a service processing apparatus is provided, applied to a fifth communication device, including:
a fourth obtaining module, configured to obtain first information, where the first information includes at least one of the following: coordination configuration information of a first radio bearer, and coordination configuration information of a first radio bearer group; and
a fourth execution module, configured to perform a fifth operation based on the first information; where
the coordination configuration information of the first radio bearer includes at least one of the following: an identifier of the first radio bearer, information of a second radio bearer, third indication information, and a time difference interval for approximate time scheduling; where the third indication information is used to indicate at least one of the following: requiring approximate time scheduling for the first radio bearer and the second radio bearer;
the coordination configuration information of the first radio bearer group includes at least one of the following:
   identifier information of the first radio bearer group, or a list composed of respective radio bearer identification information of all radio bearers in the first radio bearer group;
   information of a first tunnel group mapped by the first radio bearer group;
   fourth indication information, where the fourth indication information is used to indicate at least one of the following: a radio bearer in the first radio bearer group that requires approximate time scheduling;
   a time difference interval for approximate time scheduling; and
   information of a third radio bearer; where
   the second radio bearer is one of the following: a radio bearer associated with the first radio bearer, and a radio bearer that requires approximate time scheduling together with the first radio bearer; and
   the third radio bearer is any radio bearer mapped by the first radio bearer group; and
   the fifth operation includes at least one of the following:
      requesting approximate time scheduling on data in an associated radio bearer; and
      adding information of the first tunnel group to which a radio bearer is mapped to a header of a data packet in the radio bearer; and
      adding information of the first radio bearer group to which a radio bearer corresponds to a header of a data packet in the radio bearer.

According to an eleventh aspect, a communication device is provided, where the communication device includes a processor and a memory, the memory stores a program or instructions capable of running on the processor, and when the program or the instructions are executed by the processor, the steps of the method according to the first aspect are implemented, or the steps of the method according to the second aspect are implemented, the steps of the method according to the third aspect are implemented, or the steps of the method according to the fourth aspect are implemented, the steps of the method according to the fifth aspect are implemented.

According to a twelfth aspect, a readable storage medium is provided, where the readable storage medium stores a program or instructions, and when the program or the instructions are executed by a processor, the steps of the method according to the first aspect are implemented, or the steps of the method according to the second aspect are implemented, or the steps of the method according to the third aspect are implemented, or the steps of the method according to the fourth aspect are implemented, or the steps of the method according to the fifth aspect are implemented.

According to a thirteenth aspect, a chip is provided, where the chip includes a processor and a communication interface, where the communication interface is coupled to the processor, and the processor is configured to run a program or instructions to implement the steps of the method according to the first aspect, or the steps of the method according to the second aspect, or the steps of the method according to the third aspect, or the steps of the method according to the fourth aspect, or the steps of the method according to the fifth aspect.

According to a fourteenth aspect, a computer program/program product is provided, where the computer program/program product is stored in a storage medium, and the computer program/program product is executed by at least one processor to implement the steps of the method according to the first aspect, or to implement the steps of the method according to the second aspect, or to implement the steps of the method according to the third aspect, or to implement the steps of the method according to the fourth aspect, or to implement the steps of the method according to the fifth aspect.

In the embodiments of this application, different data flows with the same QoS parameters can be mapped to different QoS flows, thereby achieving approximate time scheduling for multiple multimodal service flows and supporting the coordination of multiple data flows (such as multimodal service data flows).

### BRIEF DESCRIPTION OF DRAWINGS

FIG. 1 is a block diagram of a wireless communication system to which embodiments of this application are applicable;
FIG. 2 is a flowchart of a service processing method according to an embodiment of this application;
FIG. 3 is a flowchart of another service processing method according to an embodiment of this application;
FIG. 4 is a flowchart of another service processing method according to an embodiment of this application;
FIG. 5 is a flowchart of another service processing method according to an embodiment of this application;
FIG. 6 is a flowchart of another service processing method according to an embodiment of this application;
FIG. 7 is a flowchart of a service processing process in application scenario 1 according to an embodiment of this application;
FIG. 8 is a schematic structural diagram of a service processing apparatus according to an embodiment of this application;
FIG. 9 is a schematic structural diagram of another service processing apparatus according to an embodiment of this application;
FIG. 10 is a schematic structural diagram of another service processing apparatus according to an embodiment of this application;
FIG. 11 is a schematic structural diagram of another service processing apparatus according to an embodiment of this application;
FIG. 12 is a schematic structural diagram of another service processing apparatus according to an embodiment of this application; and
FIG. 13 is a schematic structural diagram of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

For better understanding the embodiments of this application, the following technical points are first described.

Multimodal service scenarios may include at least: single-UE multiple-flow means that flows of the same packet data unit (Packet Data Unit, PDU) session or flows of different PDU sessions; and multiple PDU sessions may have different PCFs and SMFs.

To support the coordination of multiple multimodal service flows, the following problems need to be solved.

In an embodiment of this application, a multimodal service or multimodal data can be understood as: data from different sources, and/or data sent to different destinations, and the data is data of the same task or the same application. The different destinations may be located on one or more terminals. The different sources may be located on one or more terminals. The multimodal data includes two or more pieces of unimodal data. There is a correlation among all unimodal data.

An example of a multimodal service scenario is as follows: eight-mode data, including two tunnels of videos, five tunnels of audios, and one tunnel of touch. It can provide users with a surround sound and 4D movie experience. It is not difficult to understand that the audio data flows and the video data flows need to be transmitted within an approximate time for users to feel synchronized.

Problem 1: Synchronization problem of different service flows within the same multimodal service.

For the synchronization problem, one solution is that: it is not strict per (per)-PDU synchronization, for example, a video data packet and an audio data packet have different frequencies, and also have different packet sizes and QoS requirements, so at least the following methods can be used:
(1) Different multimodal flows are mapped to establish multiple QoS flows, and each QoS flow needs to be mapped to an independent radio bearer such as a data radio bearer (Data Radio Bearer, DRB), because during DRB scheduling, these multimodal flows are on a first come first served policy, and then mapped to one DRB; even if they arrive at the same time, they are still sent in sequence; and only the one DRB is divided into different DRBs, can they be sent simultaneously,
(2) The QoS requirements of different multimodal flows may be the same or different. However, for one existing UE, different QoS flows with the same quality of service (Quality of Service, QoS) cannot be mapped. To achieve this, one solution is to use dynamic QFI (that is, no 5QIis mapped) when the QoS flows have the same QoS, so that different flows with the same QoS are mapped through different QFIs.
(3) If the header of a data flow has a time stamp label, the data flow is approximately scheduled according to the time stamp, which generally has a relatively high complexity and a relatively low priority.

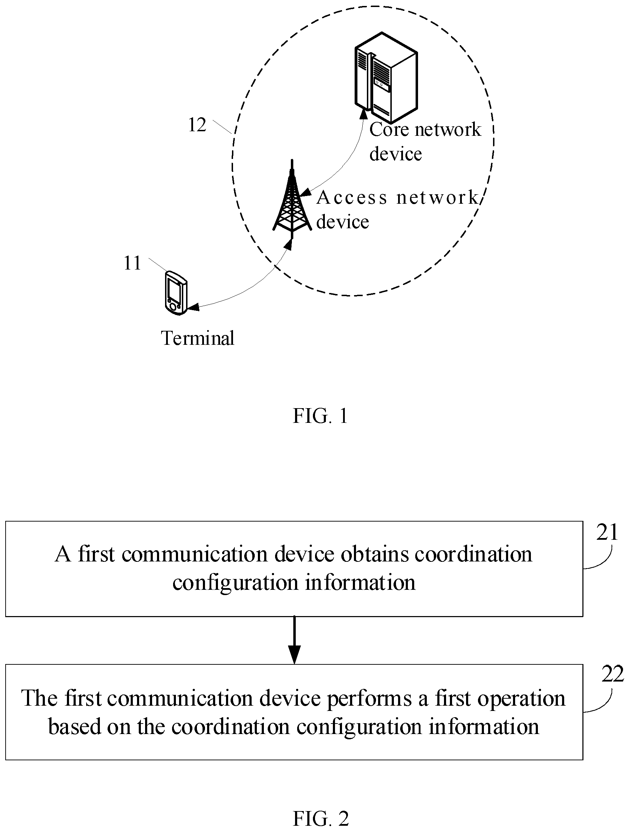

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home (home devices with a wireless communication function, for example, a refrigerator, a television, a washing machine, or a furniture), a game console, a personal computer (personal computer, PC), a teller machine or self-service machine. The wearable device includes a smart watch, a smart wristband, a smart headset, a smart glasses, a smart jewelry (smart bracelet, smart chain bracelet, smart ring, smart necklace, smart anklet, smart chain anklet), a smart wriststrap, and a smart clothing. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP), or other appropriate terms in the field, provided that the same technical effect is achieved. The base station is not limited to specific technical terms. It should be noted that in the embodiments of this application, the base station in the NR system is used as an example for introduction, and the specific type of the base station is not limited.

Optionally, obtaining may be understood as acquiring from configuration, receiving, receiving upon a request, obtaining through self-learning, obtaining through deduction based on non-received information, or obtaining through processing received information, which may be determined according to actual needs. This is not limited in the embodiments of this application. For example, when specific capability indication information transmitted by a device is not received, it can be deduced that the device does not support the capability.

Optionally, transmitting may include broadcasting, broadcasting through a system message, or returning a response after receiving the request.

In an optional embodiment of this application, the communication device may include at least one of the following: a communication network element and a terminal.

In an embodiment of this application, the communication network element may include at least one of the following: a core network network element and a radio-access-network network element.

In these embodiment of this application, the core network network element (CN network element) may include but is not limited to at least one of the following: a core network node, a core network function, a Mobility Management Entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), Local NEF (Local NEF, L-NEF), a Binding Support Function (Binding Support Function, BSF), and an application function (Application Function, AF).

In the embodiments of this disclosure, the RAN network element may include but is not limited to at least one of the following: a radio access networks device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a nodeB (NodeB), a non-3GPP interworking function (Non-3GPP Inter Working Function, N3IWF), an access controller (Access Controller, AC) node, an access-point (Access Point, AP) device, a wireless local area network (Wireless Local Area Networks, WLAN) node, or an N3IWF.

The base station may be a base transceiver station (BTS, Base Transceiver Station) in GSM or CDMA, or a Node B (NodeB) in WCDMA, or an evolved Node B (eNB or e-NodeB, evolutional Node B) in LTE, and a 5G nodeB (gNB), which is not limited in the embodiment of this application.

In an optional embodiment of this application, the UE may include one of the following: a terminal device, a terminal device and a card, and a card.

In an optional embodiment of this application, the card may include one of the following: a SIM card, a USIM card, and an eSIM.

In an optional embodiment of this application, the terminal may include a relay supporting a terminal function and/or a terminal supporting a relay function. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of this application.

In an embodiment of this application, a data flow includes a service data flow (such as a service data flow). The data flow may be referred to as a flow or a data flow.

In an embodiment of this application, the policy authorization includes QoS policy authorization.

In an embodiment of this application, "association", "associated with", "association relationship", and/or "mutual association" includes at least one of the following: dependency, being dependent, and requiring approximate time scheduling together. For example, the first tunnel is associated with the second tunnel, which may indicate that the first tunnel and the second tunnel require approximate time scheduling together.

In an embodiment of this application, approximate time scheduling includes approximate time reception and/or approximate time transmission of data that needs to arrive at a destination at an approximate time.

In an embodiment of this application, performing approximate time scheduling on a tunnel means performing approximate time scheduling on data in a tunnel.

In an embodiment of this application, information of a terminal can be used to identify the terminal. The information of the terminal may include at least one of the following: an identifier of the terminal, an IP address of the terminal, and a MAC address of the terminal.

In an embodiment of this application, the tunnel is a sub-tunnel of a superior tunnel. The superior tunnel is, for example, a PDU session, and the tunnel is, for example, a QoS flow.

In an embodiment of this application, a QoS policy is a sub-policy of a superior QoS policy. The superior QoS policy is, for example, a PCC rule, and the QoS policy is, for example, a QoS rule.

In an embodiment of this application, description information of a data flow is used to identify that the data flow belongs to at least one of the following: a service, an application, and a task.

In an embodiment of this application, the description information of the data flow includes at least one of the following: service type information, a fully qualified domain name (Fully Qualified Domain Name, FQDN), a source IP address, a destination IP address, a source port, a destination, a protocol number, a source media access control (Media Access Control, MAC) address, a destination MAC address, an application (Application) identifier of a service, an operating system (operating system, OS) identifier, a packet detection rule (packet detection rule, PDR), and data network name (Data Network Name, DNN).

In an optional embodiment of the present invention, the QoS identifier (for example, 5QI or QCI) is used to map values of a set of QoS parameters (for example, packet delay budget (Packet Delay Budget), bit error rate (for example, Packet Error Rate), maximum data burst (Maximum Data Burst), averaging window (Averaging window), and transmission rate). The QoS identifier may also be referred to as QoS class indicator information.

In an embodiment of this application, the QoS parameters of the data flow include QoS parameters requested by the data flow.

In an embodiment of this application, the requested QoS and/or QoS parameters may include at least one of the following: priority information, packet delay budget, packet error rate, maximum data burst volume, whether guaranteed bit rate (Guaranteed Bit Rate, GBR) is guaranteed, whether there is a default averaging window requirement, default averaging window, and GBR-related QoS parameter information.

In an embodiment of this application, the tunnel is of GBR type, meaning that QoS information of the tunnel includes a GBR-related QoS parameter.

In an embodiment of this application, information of the GBR-related QoS parameter may include at least one of the following: uplink and/or downlink guaranteed flow bit rate GFBR, uplink and/or downlink maximum flow bit rate MFBR, uplink and/or downlink GBR, and uplink and/or downlink maximum bit rate MBR.

In an embodiment of this application, a QoS information requirement may be one of the following: QoS information and a QoS parameter requirement; where the QoS information may be one of the following: a QoS information requirement and a QoS parameter requirement.

In an embodiment of this application, a QoS class indicator may be called 5QI, QCI (QoS type indicator), or other names, which is not limited in this application. 5QI may be used as QFI (QoS flow identifier).

In an embodiment of this application, packet filter information may be used to map data to a tunnel of a network. The packet filter information may also be called TFT, SDF, or other names, which is not specifically limited in this application.

In the embodiment of this application, the data packet filtering information, the packet filter information, and the packet filter may represent the same meaning and can be used interchangeably. The QoS parameter information and the QoS parameter may represent the same meaning and can be used interchangeably. The QoS class indicator information and the QoS class indicator may represent the same meaning and can be used interchangeably. The QoS flow description information and the QoS flow description may represent the same meaning and can be used interchangeably. The priority information, the QoS priority information, and the priority may represent the same meaning and can be used interchangeably.

In an optional embodiment of this application, the tunnel may include at least one of the following: a PDU session, a quality of service (Quality of Service QoS) flow, an evolved packet system (Evolved Packet System, EPS) bearer, packet data protocol (Packet Data Protocol, PDP) context, a DRB, a signaling radio bearer (Signalling Radio Bearer, SRB), and an internet protocol security (Internet Protocol Security, IPsec) association.

In an embodiment of this application, an IPsec tunnel may be an IPsec security association (Security Association, SA). A first IPsec tunnel may be called one of the following: signaling IPsec SA, IPsec primary SA, IPsec SA for transmitting control signaling; or other names, which is not specifically limited in this application. A data IPsec tunnel may be called one of the following: data IPsec SA, IPsec sub-SA, IPsec SA for transmitting user plane data, IPsec SA for transmitting QoS flow data, or other names, which is not specifically limited in this application.

In an embodiment of this application, a non-public network is an abbreviation of non-public network. The non-public network may be called one of the following: a non-public communication network. The non-public network may include at least one of the following deployments: a physical non-public network, a virtual non-public network, and a non-public network implemented on a public network. In an implementation, the non-public network is a closed access group (Closed Access Group, CAG). One CAG may include a group of terminals.

In an embodiment of this application, a non-public network service is an abbreviation of non-public network service. The non-public network service may also be called one of the following: a non-public-network network service, a non-public communication service, a non-public network communication service, a non-public-network network service, or other names. It should be noted that the naming method is not specifically limited in the embodiments of this application. In an implementation, the non-public network is a closed access group, and in this case, the non-public network service is a network service of the closed access group.

In an embodiment of this application, the non-public network may include or be called a private network. The private network may be called one of the following: private communication network, private network, local area network (Local Area Network, LAN), private virtual network (Private Virtual Network, PVN), isolated communication network, dedicated communication network, or other names. It should be noted that the naming method is not specifically limited in the embodiments of this application.

In an embodiment of this application, the non-public network service may include or be called a private network service. The private network service may be called one of the following: private-network network service, private communication service, private network service, private network service, local area network (LAN) service, private virtual network (PVN) service, isolated communication network service, dedicated communication network service, dedicated network service, or other names. It should be noted that the naming method is not specifically limited in the embodiments of this application.

In an embodiment of this application, the public network is an abbreviation of public network. The public network may be called one of the following: a public communication network or other names. It should be noted that the naming method is not specifically limited in the embodiments of this application.

In an embodiment of this application, the non-public network service is an abbreviation of non-public network service. The public network service may also be called one of the following: public-network network service, public communication service, public network communication service, public-network network service, or other names. It should be noted that the naming method is not specifically limited in the embodiments of this application.

In an embodiment of this application, an NG interface may also be called S 1 interface or N2 interface, and the naming is not limited.

The following describes in detail a service processing method provided in the embodiments of this application through some embodiments and application scenarios thereof with reference to the accompanying drawings.

Referring to FIG. 2, an embodiment of the present invention provides a service processing method, applied to a first communication device. The first communication device includes but is not limited to a RAN network element or a core network (Core Network, CN) network element (for example, but not limited to, UPF), UE, or the like. When being a CN network element, the first communication device may be called a first CN network element, and the method includes the following steps.

Step 21. The first communication device obtains coordination configuration information.

Step 22. The first communication device performs a first operation based on the coordination configuration information.

In this embodiment, the coordination configuration information may include at least one of the following: coordination configuration information of a first tunnel, coordination configuration information of a second tunnel, and coordination configuration information of a first tunnel group.

Optionally, the coordination configuration information of the first tunnel includes at least one of the following: an identifier of the first tunnel, a quality of service QoS parameter of the first tunnel, information of a second tunnel, first indication information, and a time difference interval for approximate time scheduling; where the first indication information is used to indicate at least one of the following: mapping different radio bearers for the first tunnel and the second tunnel, mapping an independent radio bearer for the first tunnel, and requiring approximate time scheduling for the first tunnel and the second tunnel.

Optionally, the coordination configuration information of the first tunnel group includes at least one of the following:
identifier information of the first tunnel group, or a list composed of respective tunnel identification information of all tunnels in the first tunnel group;
second indication information, where the second indication information is used to indicate at least one of the following: mapping an independent radio bearer for a data flow in the first tunnel group, mapping an independent radio bearer for a tunnel in the first tunnel group, and requiring approximate time scheduling for a tunnel in the first tunnel group;
a time difference interval for approximate time scheduling; and
a list composed of information of a third tunnel.

Optionally, the second tunnel is one of the following: a tunnel associated with the first tunnel, and a tunnel that requires approximate time scheduling together with the first tunnel. The third tunnel is a tunnel included in the first tunnel group.

Optionally, the first operation may include at least one of the following:
determining a radio bearer for a tunnel;
determining an association relationship of a radio bearer;
performing approximate time scheduling on data in an associated radio bearer;
requesting approximate time scheduling on data in an associated radio bearer; and
sending first information, where the first information includes at least one of the following: coordination configuration information of a first radio bearer, and coordination configuration information of a first radio bearer group.

In an implementation, the first communication device may receive the coordination configuration information from a first source, where the first source includes but is not limited to a third communication device, a third CN network element (for example, SMF), or the like.

In an implementation, the first communication device may send the first information to a first destination, where the first destination includes but is not limited to a fifth communication device such as a terminal.

In an implementation, the requiring approximate time scheduling for a tunnel in the first tunnel group includes a requiring approximate time scheduling on data in the tunnel in the first tunnel group.

In an implementation, the first communication device is a terminal and can request approximate time scheduling on data in an associated radio bearer from the RAN.

In an implementation, the first communication device is the RAN, and can perform at least one of the following: determining a radio bearer for a tunnel; determining an association relationship of a radio bearer; and performing approximate time scheduling on data in an associated radio bearer.

In an implementation, when the first tunnel and/or the second tunnel is a QoS flow, a superior tunnel of the first tunnel and/or the second tunnel is a PDU session.

Optionally, the coordination configuration information of the first radio bearer includes at least one of the following: an identifier of the first radio bearer, information of the second radio bearer, third indication information, and a time difference interval for approximate time scheduling; where the third indication information is used to indicate at least one of the following: requiring approximate time scheduling for the first radio bearer and the second radio bearer.

Optionally, the coordination configuration information of the first radio bearer group may include at least one of the following:
identifier information of the first radio bearer group, or a list composed of respective radio bearer identification information of all radio bearers in the first radio bearer group;
information of the first tunnel group mapped by the first radio bearer group;
fourth indication information, where the fourth indication information is used to indicate at least one of the following: a radio bearer in the first radio bearer group that requires approximate time scheduling;
a time difference interval for approximate time scheduling; and
information of a third radio bearer.

Optionally, the second radio bearer is one of the following: a radio bearer associated with the first radio bearer, and a radio bearer that requires approximate time scheduling together with the first radio bearer. The third radio bearer is any radio bearer in the first radio bearer group.

In an implementation, the information of the second radio bearer includes: an identifier of the second radio bearer.

In an implementation, the information of the third radio bearer includes: an identifier of the third radio bearer.

In an implementation, the radio bearer identification information includes: an identifier of the radio bearer.

In an implementation, the information of the tunnel group includes at least one of the following:
identifier information of the tunnel group, or a list composed of respective tunnel identification information of all tunnels in the tunnel group; and
indication information used to indicate at least one of the following: performing approximate time scheduling on data in the tunnel group.

Optionally, the information of the second tunnel includes at least one of the following: an identifier of the second tunnel, information of a terminal to which the second tunnel corresponds, and information of a superior tunnel to which the second tunnel corresponds; and/or
the information of the third tunnel includes at least one of the following: an identifier of the third tunnel, information of a terminal to which the third tunnel corresponds, and fifth indication information; where the fifth indication information is used to indicate: mapping an independent radio bearer for the third tunnel; and/or
the tunnel identification information includes at least one of the following: an identifier of the tunnel, information of a terminal to which the tunnel corresponds, and information of a superior tunnel to which the tunnel corresponds.

Optionally, the determining a radio bearer for a tunnel may include at least one of the following:
determining an association relationship of a radio bearer;
mapping different radio bearers for different tunnels having an association relationship;
mapping different radio bearers for the first tunnel and the second tunnel;
mapping an independent radio bearer for the first tunnel;
mapping an independent radio bearer for a tunnel in the first tunnel group; and
mapping an independent first radio bearer group for the first tunnel group, where radio bearers in the first radio bearer group are associated with each other.

Optionally, the operation of determining an association relationship of a radio bearer may include at least one of the following:
in a case that tunnel A is associated with tunnel B, determining at least one of the following: the first radio bearer includes a radio bearer mapped by the tunnel A, and the second radio bearer includes a radio bearer mapped by the tunnel B;
in a case that the first tunnel is tunnel A, the tunnel A is associated with tunnel B, and the tunnel B is associated with tunnel C, determining at least one of the following: the second radio bearer includes a radio bearer mapped by the tunnel B and a radio bearer mapped by the tunnel C;
in a case that tunnel A requires approximate time scheduling together with tunnel B, determining at least one of the following: the first radio bearer includes a radio bearer mapped by the tunnel A, and the second radio bearer includes a radio bearer mapped by the tunnel B;
in a case that tunnel A requires approximate time scheduling together with tunnel B, determining at least one of the following: the first radio bearer includes a radio bearer mapped by the tunnel B, and the second radio bearer includes a radio bearer mapped by the tunnel A;
in a case that tunnel D and tunnel E are associated with each other, generating a first radio bearer group, where the first radio bearer group includes a radio bearer mapped by the tunnel D and a radio bearer mapped by the tunnel E;
in a case that tunnel D requires approximate time scheduling together with tunnel E, generating a first radio bearer group, where the first radio bearer group includes a radio bearer mapped by the tunnel D and a radio bearer mapped by the tunnel E; and
mapping a first radio bearer group for the first tunnel group; where
the first radio bearer is a radio bearer mapped by the first tunnel; and the second radio bearer is at least one of the following: a radio bearer associated with the first radio bearer, and a radio bearer mapped by the second tunnel; and the radio bearers in the first radio bearer group are associated with each other.

Optionally, the performing approximate time scheduling on data in an associated radio bearer includes at least one of the following:
scheduling and/or sending based on a data stamp of a downlink data packet in the radio bearer; and
scheduling and/or receiving based on a data stamp of an uplink data packet in the radio bearer; where
a time difference of scheduling and/or sending downlink data packets in different associated radio bearers does not exceed a time difference for approximate time scheduling;
a time difference of scheduling and/or receiving uplink data packets in different associated radio bearers does not exceed a time difference for approximate time scheduling;
a difference between a time of scheduling and/or sending a downlink data packet in the radio bearer and a time stamp of the downlink data packet does not exceed a time difference for approximate time scheduling; and
a difference between a time of scheduling and/or receiving an uplink data packet in the radio bearer and a time stamp of the uplink data packet does not exceed a time difference for approximate time scheduling.

In an implementation, the time stamp of the data packet is a sending time stamp of the data packet, or a time stamp when the data packet is expected to arrive at the destination (for example, a client).

It is not difficult to understand that through this embodiment of this application, approximate time scheduling can be performed on multiple data flows (such as multimodal service data flows), thereby supporting the coordination of multiple data flows (such as multimodal data flows).

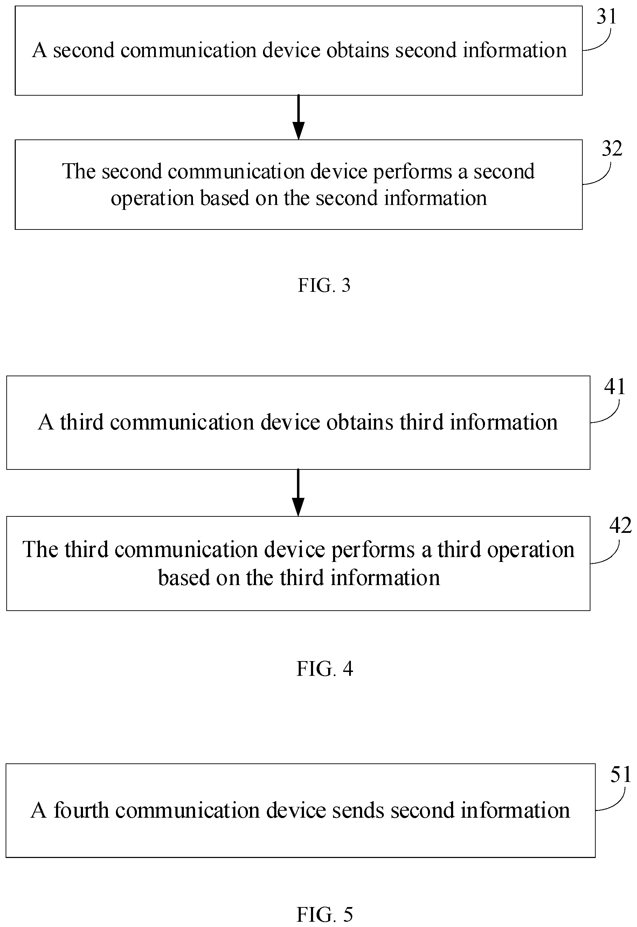

Referring to FIG. 3, an embodiment of the present invention provides a service processing method, applied to a second communication device. The second communication device includes but is not limited to a CN network element (for example, but not limited to, PCF). When being a CN network element, the second communication device may be called a second CN network element, and the method includes the following steps.

Step 31. The second communication device obtains second information.

Step 32. The second communication device performs a second operation based on the second information.

In this embodiment, the second information includes at least one of the following: a first request message, and first request information.

Optionally, the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group.

Optionally, the first request information includes at least one of the following: coordination requirement information of a first data flow, and coordination requirement information of a first data flow group.

Optionally, the coordination requirement information of the first data flow includes at least one of the following:
description information of the first data flow;
information of a terminal to which the first data flow corresponds;
a QoS parameter requested by the first data flow;
information of the second data flow;
a time difference interval for approximate time scheduling between the first data flow and the second data flow; and
sixth indication information, where the sixth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow.

Optionally, the coordination requirement information of the first data flow group includes at least one of the following:
identifier information of the first data flow group, or a list composed of respective data flow identification information of all data flows in the first data flow group;
seventh indication information, where the seventh indication information is used to indicate at least one of the following: mapping an independent tunnel for a data flow in the first data flow group, mapping an independent QoS policy for a data flow in the first data flow group, and performing approximate time scheduling for a data flow in the first data flow group;
a list composed of information of a third data flow; and
a time difference interval for approximate time scheduling for a data flow in the first data flow group.

The second data flow is a data flow associated with the first data flow; and
the third data flow is a data flow included in the first data flow group.

Optionally, the second operation may include at least one of the following:
determining a QoS policy for a data flow;
mapping a first QoS policy group for the first data flow group; and
sending third information, where the third information includes at least one of the following: a first QoS policy, and a first QoS policy group.

In an implementation, the second communication device can receive second information from a second source, where the second source includes but is not limited to a fourth communication device, a fourth CN network element (for example, but not limited to AF and NEF), or the like.

In an implementation, the second communication device can send third information to a second destination, where the second destination includes but is not limited to a third communication device, a third CN network element (for example, but not limited to, SMF), or the like.

In an implementation, the list of data flow identification information of data flows in the first service flow group refers to the list of data flow identification information of all data flows in the first service flow group.

Optionally, the first QoS policy includes at least one of the following: an identifier of the first QoS policy; a QoS parameter of the first QoS policy, information of a second QoS policy, information of a second data flow, eighth indication information, and a time difference interval for approximate time scheduling; where the eighth indication information is used to indicate at least one of the following: mapping different tunnels for the first QoS policy and the second QoS policy, and mapping an independent tunnel for the first QoS policy; and/or
information of the first QoS policy group includes at least one of the following:
identifier information of the first QoS policy group, or identification information of a QoS policy in the first QoS policy group;
ninth indication information, where the ninth indication information is used to indicate at least one of the following: mapping an independent tunnel for a data flow in the first QoS policy group, mapping an independent tunnel for a QoS policy in the first QoS policy group, performing approximate time scheduling for a data flow in the first QoS policy group, requiring approximate time scheduling for a QoS policy in the first QoS policy group, and requiring approximate time scheduling for respective data flows in all QoS policies in the first QoS policy group;
a time difference interval for approximate time scheduling; and
a list composed of information of a third QoS policy.

The second QoS policy is a QoS policy associated with the first QoS policy;
the third QoS policy is a QoS policy included in the first QoS policy group; and
the second data flow is a data flow on which the first data flow depends.

In an implementation, the first QoS policy is a QoS policy of the first data flow.

Optionally, the information of the second QoS policy includes at least one of the following: an identifier of the second QoS policy, information of a terminal to which the second QoS policy corresponds, and information of a superior QoS policy to which the second QoS policy belongs; and/or
the information of the third QoS policy includes at least one of the following: an identifier of the third QoS policy, information of a terminal to which the third QoS policy corresponds, and tenth indication information; where the tenth indication information is used to indicate: mapping an independent tunnel for the third QoS policy; and/or
the identification information of the QoS policy includes at least one of the following: an identifier of the QoS policy, information of a terminal to which the QoS policy corresponds, and information of a superior QoS policy to which the QoS policy belongs.

Optionally, the determining a QoS policy for a data flow includes at least one of the following:
determining an association relationship of the QoS policy;
mapping different QoS policies for different data flows having an association relationship;
mapping different QoS policies for the first data flow and the second data flow,
mapping an independent QoS policy for the first data flow;
mapping an independent QoS policy for a data flow in the first service data group;
in a case that a QoS identifier mapped by a QoS parameter requested by the first data flow is the same as a QoS identifier mapped by a QoS parameter requested by the second data flow, performing at least one of the following: skipping mapping the QoS identifiers, mapping a QoS parameter in the first data flow request to a QoS parameter in the QoS policy, where the mapped QoS parameter of the QoS policy does not include a QoS identifier, and mapping a QoS parameter in the second data flow request to a QoS parameter in the QoS policy, where the mapped QoS parameter of the QoS policy does not include a QoS identifier; and
in a case that QoS identifiers mapped by QoS parameters requested by two or more data flows in the first data flow group are the same, performing at least one of the following: skipping mapping the QoS identifiers, and mapping a QoS parameter in the data flow request to a QoS parameter in the QoS policy, where the mapped QoS parameter in the QoS policy does not include a QoS identifier.

Optionally, the determining an association relationship of a QoS policy includes at least one of the following:
in a case that data flow A is associated with data flow B, determining at least one of the following: the first QoS policy includes a QoS policy mapped by the data flow A, and the second QoS policy includes a QoS policy mapped by the data flow B;
in a case that the first data flow is data flow A, the data flow A is associated with data flow B, and the data flow B is associated with data flow C, determining at least one of the following: the second QoS policy includes a QoS policy mapped by the data flow B and a QoS policy mapped by the data flow C;
in a case that data flow A requires approximate time scheduling together with data flow B, determining at least one of the following: the first QoS policy includes a QoS policy mapped by the data flow A, and the second QoS policy includes a QoS policy mapped by the data flow B;
in a case that data flow A requires approximate time scheduling together with data flow B, determining at least one of the following: the first QoS policy includes a QoS policy mapped by the data flow B, and the second QoS policy includes a QoS policy mapped by the data flow A;
in a case that data flow D is associated with data flow E, generating a first QoS policy group, where the first QoS policy group includes a QoS policy mapped by the data flow D and a QoS policy mapped by the data flow E;
in a case that data flow D requires approximate time scheduling together with data flow E, generating a first QoS policy group, where the first QoS policy group includes a QoS policy mapped by the data flow D and a QoS policy mapped by the data flow E; and
mapping a first QoS policy group for the first data flow group; where
the first QoS policy is a QoS policy mapped by the first data flow; the second QoS policy is at least one of the following: a QoS policy associated with the first QoS policy, and a QoS policy mapped by the second data flow; and QoS policies in the first QoS policy group are associated with each other.

Optionally, the operation of mapping the first QoS policy group for the first data flow group includes: the first QoS policy group includes information of a third QoS policy; where the third QoS policy is a QoS policy mapped by the third data flow; and the third data flow is a data flow included in the first data flow group.

It is not difficult to understand that through this embodiment of this application, approximate time scheduling can be performed on multiple data flows (such as multimodal service data flows), thereby supporting the coordination of multiple data flows (such as multimodal data flows).

Referring to FIG. 4, an embodiment of the present invention provides a service processing method, applied to a third communication device. The third communication device includes but is not limited to a CN network element (for example, but not limited to, SMF). When being a CN network element, the third communication device may be called a third CN network element, and the method includes the following steps.

Step 41. The third communication device obtains third information.

Step 42. The third communication device performs a third operation based on the third information.

In this embodiment, the third information may include at least one of the following: a first QoS policy, and a first QoS policy group.

Optionally, the first QoS policy includes at least one of the following: an identifier of the first QoS policy; a QoS parameter of the first QoS policy, information of a second QoS policy, information of a second data flow, eighth indication information, and a time difference interval for approximate time scheduling; where the eighth indication information is used to indicate at least one of the following: mapping different tunnels for the first QoS policy and the second QoS policy, and mapping an independent tunnel for the first QoS policy.

Optionally, information of the first QoS policy group may include at least one of the following:
identifier information of the first QoS policy group, or a list composed of respective QoS policy identification information of all QoS policies in the first QoS policy group;
ninth indication information, where the ninth indication information is used to indicate at least one of the following: mapping an independent tunnel for a data flow in the first QoS policy group, mapping an independent tunnel for a QoS policy in the first QoS policy group, performing approximate time scheduling for a data flow in the first QoS policy group, and requiring approximate time scheduling for a QoS policy in the first QoS policy group;
a time difference interval for approximate time scheduling; and
a list composed of information of a third QoS policy; where
the second QoS policy is a QoS policy associated with the first QoS policy;
the third QoS policy is a QoS policy included in the first QoS policy group; and
the second data flow is a data flow on which the first data flow depends.

Optionally, the third operation may include at least one of the following:
determining a tunnel for a data flow;
determining a tunnel for a QoS policy;
determining an association relationship of a tunnel; and
sending coordination configuration information, where the coordination configuration information includes at least one of the following: coordination configuration information of a first tunnel, coordination configuration information of a second tunnel, and coordination configuration information of a first tunnel group.

In an implementation, the first QoS policy is a QoS policy of the first data flow.

In an implementation, the third communication device can receive the third information from a third source, where the third source includes but is not limited to a second communication device, a second CN network element, for example, PCF, and the like.

In an implementation, the third communication device can send the coordination configuration information to a third destination, where the third destination includes but is not limited to a first communication device, a RAN network element, a first CN network element (for example, but not limited to, UPF), UE, and the like.

Optionally, the coordination configuration information of the first tunnel includes at least one of the following: an identifier of the first tunnel, a QoS parameter of the first tunnel, information of a second tunnel, first indication information, and a time difference interval for approximate time scheduling; where the first indication information is used to indicate at least one of the following: mapping different radio bearers for the first tunnel and the second tunnel, mapping an independent radio bearer for the first tunnel, and requiring approximate time scheduling for the first tunnel and the second tunnel; and/or
the coordination configuration information of the first tunnel group includes at least one of the following:
identifier information of the first tunnel group, or a list composed of respective tunnel identification information of all tunnels in the first tunnel group;
second indication information, where the second indication information is used to indicate at least one of the following: mapping an independent radio bearer for a data flow in the first tunnel group, mapping an independent radio bearer for a tunnel in the first tunnel group, and requiring approximate time scheduling for a tunnel in the first tunnel group;
a time difference interval for approximate time scheduling; and
a list composed of information of a third tunnel; where
the second tunnel is a tunnel associated with the first tunnel;
the third tunnel is any tunnel in the first tunnel group; and
the first tunnel is a tunnel mapped by the first QoS policy.

Optionally, the information of the second tunnel includes at least one of the following: an identifier of the second tunnel, information of a terminal to which the second tunnel corresponds, and information of a superior tunnel to which the second tunnel corresponds; and/or
the information of the third tunnel includes at least one of the following: an identifier of the third tunnel, information of a terminal to which the third tunnel corresponds, and third indication information; where the third indication information is used to indicate: mapping an independent radio bearer for the third tunnel; and/or
the tunnel identification information includes at least one of the following: an identifier of the tunnel, information of a terminal to which the tunnel corresponds, and information of a superior tunnel to which the tunnel corresponds.

Optionally, the determining a tunnel for a QoS policy includes at least one of the following:
determining an association relationship of the tunnel;
mapping different tunnels for different QoS policies having an association relationship;
mapping different tunnels for the first QoS policy and the second QoS policy;
mapping an independent tunnel for the first QoS policy; and
mapping an independent tunnel for a QoS policy in the first service data group.

Optionally, the operation of determining an association relationship of the tunnel includes at least one of the following:
in a case that QoS policy A is associated with QoS policy B, determining at least one of the following: the first tunnel includes a tunnel mapped by the QoS policy A, and the second tunnel includes a tunnel mapped by the QoS policy B;
in a case that the first QoS policy is QoS policy A, the QoS policy A is associated with QoS policy B, and the QoS policy B is associated with QoS policy C, determining at least one of the following: the second tunnel includes a tunnel mapped by the QoS policy B and a tunnel mapped by the QoS policy C;
in a case that QoS policy A requires approximate time scheduling together with QoS policy B, determining at least one of the following: the first tunnel includes a tunnel mapped by the QoS policy A, and the second tunnel includes a tunnel mapped by the QoS policy B;
in a case that QoS policy A requires approximate time scheduling together with QoS policy B, determining at least one of the following: the first tunnel includes a tunnel mapped by the QoS policy B, and the second tunnel includes a tunnel mapped by the QoS policy A;
in a case that QoS policy D is associated with QoS policy E, generating a first tunnel group, where the first tunnel group includes a tunnel mapped by the QoS policy D and a tunnel mapped by the QoS policy E;
in a case that QoS policy D requires approximate time scheduling together with QoS policy E, generating a first tunnel group, where the first tunnel group includes a tunnel mapped by the QoS policy D and a tunnel mapped by the QoS policy E; and
mapping the first tunnel group for the first QoS policy group; where
the first tunnel is a tunnel mapped by the first QoS policy;
the second tunnel is at least one of the following: a tunnel associated with the first tunnel, and a tunnel mapped by the second QoS policy; and
tunnels in the first tunnel group are associated with each other.

In an implementation, QoS policy A is associated with QoS policy B, which may indicate that the QoS policy A and the QoS policy B require approximate time scheduling together, or that data flows in the QoS policy A associated with the QoS policy B require approximate time scheduling together. Similarly, QoS policy D is associated with QoS policy E, which may also indicate that the QoS policy D and the QoS policy E require approximate time scheduling together, or that data flows in the QoS policy A associated with the QoS policy B require approximate time scheduling together.

In an implementation, the tunnels in the first tunnel group are associated with each other, which means that the tunnels in the first tunnel group require approximate time scheduling together.

Optionally, the determining a tunnel for a data flow includes at least one of the following:
determining an association relationship of the tunnel;
mapping different tunnels for the first service data and the second service data;
mapping an independent tunnel for the first service data; and
mapping an independent tunnel for service data in the first service data group.

Optionally, the determining an association relationship of the tunnel includes at least one of the following:
in a case that data flow A is associated with data flow B, determining at least one of the following: the first tunnel includes a tunnel mapped by the data flow A, and the second tunnel includes a tunnel mapped by the data flow B;
in a case that the first data flow is data flow A, the data flow A is associated with data flow B, and the data flow B is associated with data flow C, determining at least one of the following: the second tunnel includes a tunnel mapped by the data flow B and a tunnel mapped by the data flow C;
in a case that data flow A requires approximate time scheduling together with data flow B, determining at least one of the following: the first tunnel includes a tunnel mapped by the data flow A, and the second tunnel includes a tunnel mapped by the data flow B;
in a case that data flow A requires approximate time scheduling together with data flow B, determining at least one of the following: the first tunnel includes a tunnel mapped by the data flow B, and the second tunnel includes a tunnel mapped by the data flow A;
in a case that data flow D is associated with data flow E, generating a first tunnel group, where the first tunnel group includes a tunnel mapped by the data flow D and a tunnel mapped by the data flow E;
in a case that data flow D requires approximate time scheduling together with data flow E, generating a first tunnel group, where the first tunnel group includes a tunnel mapped by the data flow D and a tunnel mapped by the data flow E; and
mapping the first tunnel group for a first data flow group; where
the first tunnel is a tunnel mapped by the first data flow; and the second tunnel is at least one of the following: a tunnel associated with the first tunnel, and a tunnel mapped by the second data flow; and tunnels in the first tunnel group are associated with each other.

Optionally, the operation of mapping the first tunnel group for a first data flow group includes: the first tunnel group includes a third tunnel; where the third tunnel is one of the following: a tunnel mapped by a third data flow, and a tunnel mapped by the third QoS policy; the third data flow is any data flow included in the first data flow group; and the third QoS policy is any QoS policy included in the first QoS policy group.

Optionally, the operation of mapping the first tunnel group for the first QoS policy group includes: the first tunnel group includes a third tunnel; where the third tunnel is one of the following: a tunnel mapped by a third data flow, and a tunnel mapped by the third QoS policy; the third data flow is any data flow included in the first data flow group; and the third QoS policy is any QoS policy included in the first QoS policy group.

In an implementation, the association includes at least one of the following: dependency, being dependent, and requiring approximate time scheduling together.

In an implementation, the second tunnel being a tunnel associated with the first tunnel includes the second tunnel being a tunnel on which the first tunnel depends.

It is not difficult to understand that through this embodiment of this application, approximate time scheduling can be performed on multiple data flows (such as multimodal service data flows), thereby supporting the coordination of multiple data flows (such as multimodal data flows).

Referring to FIG. 5, an embodiment of the present invention provides a service processing method, applied to a fourth communication device. The fourth communication device includes but is not limited to a CN network element (for example, but not limited to, AF and NEF). When being a CN network element, the fourth communication device may be called a fourth CN network element, and the method includes the following steps.

Step 51. The fourth communication device sends second information.

In this embodiment, the second information includes at least one of the following: a first request message, and first request information.

Optionally, the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group.

Optionally, the first request information includes at least one of the following: coordination requirement information of a first data flow, and coordination requirement information of a first data flow group.

Optionally, the coordination requirement information of the first data flow includes at least one of the following:
description information of the first data flow;
information of a terminal to which the first data flow corresponds;
a QoS parameter requested by the first data flow;
information of the second data flow;
a time difference interval for approximate time scheduling between the first data flow and the second data flow; and
fourth indication information, where the fourth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow.

Optionally, the coordination requirement information of the first data flow group may include at least one of the following:
identifier information of the first data flow group, or a list composed of respective data flow identification information of all data flows in the first data flow group;
fifth indication information, where the fifth indication information is used to indicate at least one of the following: mapping an independent tunnel for a data flow in the first data flow group, mapping an independent QoS policy for a data flow in the first data flow group, and performing approximate time scheduling for a data flow in the first data flow group;
a list composed of information of a third data flow; and
a time difference interval for approximate time scheduling for a data flow in the first data flow group; where
the second data flow is a data flow associated with the first data flow; and the third data flow is a data flow included in the first data flow group.

In an implementation, the fourth communication device may send first information to a fourth destination, where the fourth destination includes but is not limited to a second communication device, a second CN network element (for example, PCF), and the like.

In an implementation, the first request information is included in the first request message.

In an implementation, the first request information may be included in a QoS request for sending.

In another implementation, the coordination requirement information of the first data flow may be included in a QoS request of the first data flow (which may be called a first QoS request for short) for sending.

In another implementation, the coordination requirement information of the second data flow may be included in a QoS request of the second data flow (which may be called a second QoS request for short) for sending.

In another implementation, the coordination requirement information of the first data flow group may be included in a QoS request of the first data flow group for sending.

In an implementation, the QoS request for the data flow also includes a QoS parameter requested by the data flow.

Optionally, the information of the second data flow includes at least one of the following: description information of the second data flow, information of a terminal to which the second data flow corresponds, and a QoS parameter requested by the second data flow; and/or
the information of the third data flow includes at least one of the following: description information of the third data flow, information of a terminal to which the third data flow corresponds, a QoS parameter requested by the third data flow, and eleventh indication information; where the eleventh indication information is used to indicate at least one of the following: mapping an independent tunnel for the third data flow, and mapping an independent QoS policy for the third data flow.

Optionally, any two or more data flows in the first data flow group correspond to one of the following: the same terminal, different terminals, the same application server, and different application servers.

Optionally, the data flow identification information includes at least one of the following: description information of the data flow, and information of a terminal to which the data flow corresponds.

In an implementation, the first data flow and the second data flow satisfy at least one of the following: data flows corresponding to the same task, data flows corresponding to the same service, and data flows corresponding to the same application.

In an implementation, the data flows in the first data flow group satisfy at least one of the following: data flows corresponding to the same task, data flows corresponding to the same service, and data flows corresponding to the same application.

It is not difficult to understand that through this embodiment of this application, approximate time scheduling can be performed on multiple data flows (such as multimodal service data flows), thereby supporting the coordination of multiple data flows (such as multimodal data flows).

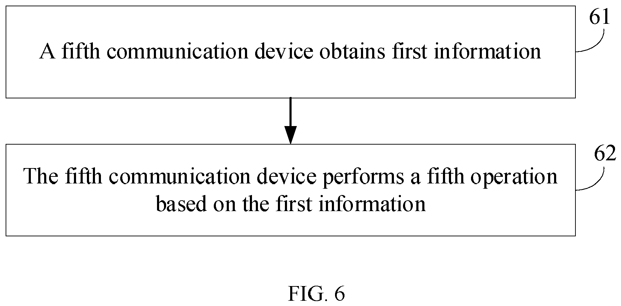

Referring to FIG. 6, an embodiment of the present invention provides a service processing method, applied to a fifth communication device. The fifth communication device includes but is not limited to a terminal, and the method includes the following steps.

Step 61. The fifth communication device obtains first information.

Step 62. The fifth communication device performs a fifth operation based on the first information.

Optionally, the first information may include at least one of the following: coordination configuration information of a first radio bearer, and coordination configuration information of a first radio bearer group.

Optionally, the coordination configuration information of the first radio bearer may include at least one of the following: an identifier of the first radio bearer, information of the second radio bearer, third indication information, and a time difference interval for approximate time scheduling; where the third indication information is used to indicate at least one of the following: requiring approximate time scheduling for the first radio bearer and the second radio bearer.

Optionally, the coordination configuration information of the first radio bearer group may include at least one of the following:
identifier information of the first radio bearer group, or a list composed of respective radio bearer identification information of all radio bearers in the first radio bearer group;
information of the first tunnel group mapped by the first radio bearer group;
fourth indication information, where the fourth indication information is used to indicate at least one of the following: a radio bearer in the first radio bearer group that requires approximate time scheduling;
a time difference interval for approximate time scheduling; and
information of a third radio bearer.

The second radio bearer is one of the following: a radio bearer associated with the first radio bearer, and a radio bearer that requires approximate time scheduling together with the first radio bearer; and the third radio bearer is any radio bearer in the first radio bearer group.

Optionally, the fifth operation may include at least one of the following:
requesting approximate time scheduling on data in an associated radio bearer;
adding information of the first tunnel group to which a radio bearer is mapped to a header of a data packet in the radio bearer; and
adding information of the first radio bearer group to which a radio bearer corresponds to a header of a data packet in the radio bearer.

In an implementation, the fifth communication device may receive the first information from a fourth source, where the fourth source includes but is not limited to a first communication device, a RAN network element, a first CN network element (for example, but not limited to, UPF), UE, and the like.

Optionally, the information of the first tunnel group includes at least one of the following:
identifier information of the first tunnel group, or a list composed of respective tunnel identification information of all tunnels in the first tunnel group; and
indication information used to indicate at least one of the following: performing approximate time scheduling on data in the first tunnel group.

Optionally, the information of the first radio bearer group includes at least one of the following:
identifier information of the first radio bearer group, or a list composed of respective radio bearer identification information of all radio bearers in the first radio bearer group; and
indication information used to indicate at least one of the following: performing approximate time scheduling on data in the first radio bearer group.

In an implementation, the information of the second radio bearer includes: an identifier of the second radio bearer.

In an implementation, the information of the third radio bearer includes: an identifier of the third radio bearer.

In an implementation, the radio bearer identification information includes: an identifier of the radio bearer.

It is not difficult to understand that through this embodiment of this application, approximate time scheduling can be performed on multiple data flows (such as multimodal service data flows), thereby supporting the coordination of multiple data flows (such as multimodal data flows).

### Application Scenario 1:

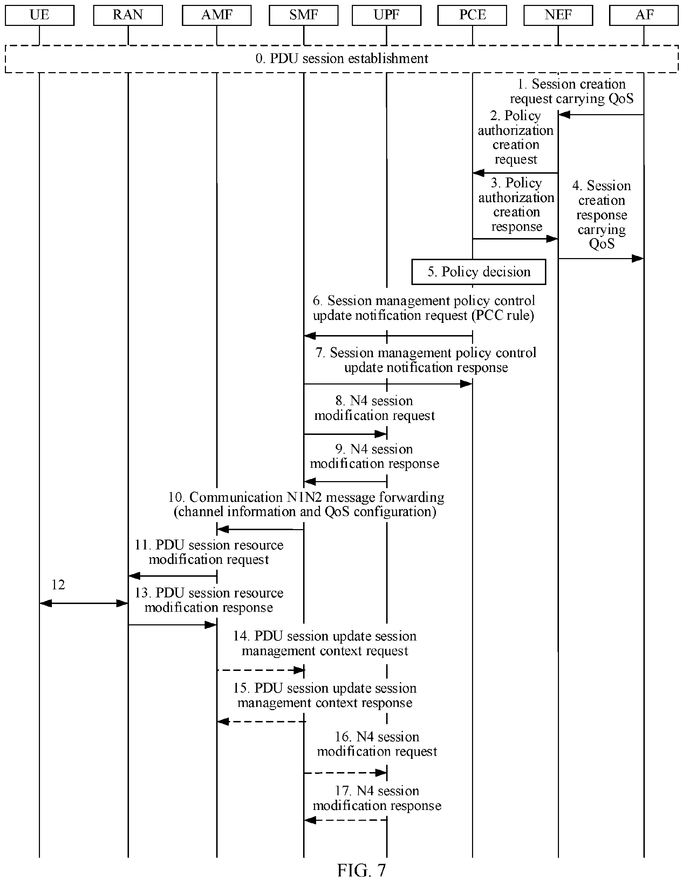

Application Scenario 1 of the embodiments of this application mainly describes the process of mapping different QoS flows for different tunnels having the same QoS parameters. Referring to FIG. 7, the process includes the following steps.

Step 1. An AF sends a session creation request carrying QoS to an NEF to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group. The session creation request message may include first request information, where the first request information includes at least one of the following: coordination requirement information of the first data flow, and coordination requirement information of the first data flow group.

Step 2. The NEF sends a policy authorization creation request to a PCF to request at least one of the following: the policy authorization, the QoS request, performing the QoS request for the data flow, mapping different tunnels for the first data flow and the second data flow, mapping different QoS policies for the first data flow and the second data flow, performing approximate time scheduling for the first data flow and the second data flow, mapping an independent tunnel for the first data flow, mapping an independent QoS policy for the first data flow, mapping an independent tunnel for the data flow in the first data flow group, mapping an independent QoS policy for the data flow in the first data flow group, and performing approximate time scheduling for a data flow in the first data flow group. The session creation request message may include first request information, where the first request information includes at least one of the following: coordination requirement information of the first data flow, and coordination requirement information of the first data flow group.

Step 3. The PCF returns a policy authorization creation response to the NEF.

Step 4. The NEF returns a session creation response carrying QoS to the AF.

Step 5. The PCF performs a second operation based on the policy authorization creation request and/or the first request information; where the second operation may include at least one of the following:
determining a QoS policy for the data flow;
mapping a first QoS policy group for the first data flow group; and
sending third information, where the third information includes at least one of the following: a first QoS policy, and a first QoS policy group.

Step 6. The PCF sends a session management policy control update notification request to an SMF, where the update notification request may include second information, and the second information includes at least one of the following: a first QoS policy, and a first QoS policy group. For the first QoS policy and/or the first QoS policy group, reference may be made to the foregoing embodiments, and details are not repeated herein.

Step 7. The SMF returns a session management policy control update notification response to the PCF.

Step 8. The SMF performs a third operation based on obtained information or the second information; where the third operation may include at least one of the following:
determining a tunnel for the data flow;
determining a tunnel for the QoS policy;
determining an association relationship of the tunnel; and
sending coordination configuration information, where the coordination configuration information includes at least one of the following: coordination configuration information of a first tunnel, coordination configuration information of a second tunnel, and coordination configuration information of a first tunnel group.

In an implementation, the SMF sends the coordination configuration information to the UPF through an N4 session modification request.

Step 9. The UPF returns an N4 session modification response to the SMF.

Step 10. The SMF forwards an N1N2 message to the AMF, where the N1N2 message includes the coordination configuration information, and the coordination configuration information includes at least one of the following: the coordination configuration information of the first tunnel, the coordination configuration information of the second tunnel, and the coordination configuration information of the first tunnel group. For specific contents of the coordination configuration information of the first tunnel, the coordination configuration information of the second tunnel, and/or the coordination configuration information of the first tunnel group, reference may be made to the foregoing embodiments, and details are not repeated herein.

Step 11. The AMF sends a PDU session resource modification request to the RAN network element, where the PDU session resource modification request includes the coordination configuration information, and the coordination configuration information includes at least one of the following: the coordination configuration information of the first tunnel, the coordination configuration information of the second tunnel, and the coordination configuration information of the first tunnel group.

Step 12. The RAN network element performs a first operation based on the coordination configuration information; where the first operation may include at least one of the following:
determining a radio bearer for a tunnel;
determining an association relationship of a radio bearer; and
performing approximate time scheduling on an associated radio bearer.

Step 13. The RAN network element sends a PDU session resource modification response to the AMF.

Step 14. Optionally, the AMF sends a PDU session update session management context request to the SMF.

Step 15. Optionally, the SMF returns a PDU session update session management context response to the AMF.

Step 16: Optionally, the SMF sends an N4 session modification request to a UPF.

Step 17. Optionally, the UPF returns an N4 session modification response to the SMF.

The service processing method provided in the embodiments of this application may be executed by a service processing apparatus. In the embodiments of this application, a service processing apparatus executing the service processing method is used as an example to illustrate the service processing apparatus provided in the embodiments of this application.

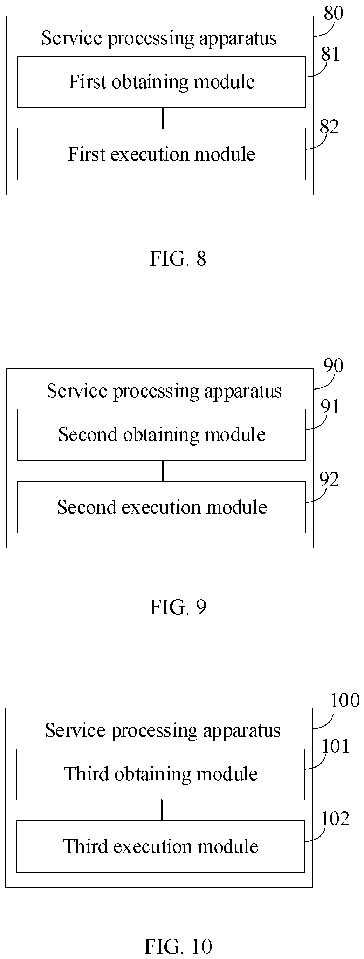

Referring to FIG. 8, FIG. 8 is a schematic structural diagram of a service processing apparatus according to an embodiment of this application. The apparatus is applied to a first communication device. As shown in FIG. 8, the service processing apparatus 80 includes:
a first obtaining module 81, configured to obtain coordination configuration information, where the coordination configuration information includes at least one of the following: coordination configuration information of a first tunnel, coordination configuration information of a second tunnel, and coordination configuration information of a first tunnel group; and
a first execution module 82, configured to perform a first operation based on the coordination configuration information; where
the coordination configuration information of the first tunnel includes at least one of the following: an identifier of the first tunnel, a quality of service QoS parameter of the first tunnel, information of the second tunnel, first indication information, and a time difference interval for approximate time scheduling; and
the first indication information is used to indicate at least one of the following: mapping different radio bearers for the first tunnel and the second tunnel, mapping an independent radio bearer for the first tunnel, and requiring approximate time scheduling for the first tunnel and the second tunnel; and
the coordination configuration information of the first tunnel group includes at least one of the following:
   identifier information of the first tunnel group, or a list composed of respective tunnel identification information of all tunnels in the first tunnel group;
   second indication information, where the second indication information is used to indicate at least one of the following: mapping an independent radio bearer for a data flow in the first tunnel group, mapping an independent radio bearer for a tunnel in the first tunnel group, and requiring approximate time scheduling for a tunnel in the first tunnel group;
   a time difference interval for approximate time scheduling; and
   a list composed of information of a third tunnel; where
   the second tunnel is one of the following: a tunnel associated with the first tunnel, and a tunnel that requires approximate time scheduling together with the first tunnel; and
   the third tunnel is a tunnel included in the first tunnel group; and
   the first operation includes at least one of the following:
      determining a radio bearer for a tunnel;
      determining an association relationship of a radio bearer; and
      performing approximate time scheduling on data in an associated radio bearer;
      requesting approximate time scheduling on data in an associated radio bearer; and
      sending first information, where the first information includes at least one of the following: coordination configuration information of a first radio bearer, and coordination configuration information of a first radio bearer group.

Optionally, the coordination configuration information of the first radio bearer includes at least one of the following: an identifier of the first radio bearer, information of the second radio bearer, third indication information, and a time difference interval for approximate time scheduling; where the third indication information is used to indicate at least one of the following: requiring approximate time scheduling for the first radio bearer and the second radio bearer; and/or
the coordination configuration information of the first radio bearer group includes at least one of the following:
identifier information of the first radio bearer group, or a list composed of respective radio bearer identification information of all radio bearers in the first radio bearer group;
information of the first tunnel group mapped by the first radio bearer group;
fourth indication information, where the fourth indication information is used to indicate at least one of the following: a radio bearer in the first radio bearer group that requires approximate time scheduling;
a time difference interval for approximate time scheduling; and
information of a third radio bearer; where
the second radio bearer is one of the following: a radio bearer associated with the first radio bearer, and a radio bearer that requires approximate time scheduling together with the first radio bearer; and
the third radio bearer is any radio bearer in the first radio bearer group.

Optionally, the information of the second tunnel includes at least one of the following: an identifier of the second tunnel, information of a terminal to which the second tunnel corresponds, and information of a superior tunnel to which the second tunnel corresponds; and/or
the information of the third tunnel includes at least one of the following: an identifier of the third tunnel, information of a terminal to which the third tunnel corresponds, and fifth indication information; where the fifth indication information is used to indicate: mapping an independent radio bearer for the third tunnel; and/or
the tunnel identification information includes at least one of the following: an identifier of the tunnel, information of a terminal to which the tunnel corresponds, and information of a superior tunnel to which the tunnel corresponds.

Optionally, the determining a radio bearer for a tunnel includes at least one of the following:
determining an association relationship of the radio bearer;
mapping different radio bearers for different tunnels having an association relationship;
mapping different radio bearers for the first tunnel and the second tunnel;
mapping an independent radio bearer for the first tunnel;
mapping an independent radio bearer for a tunnel in the first tunnel group; and
mapping an independent first radio bearer group for the first tunnel group, where radio bearers in the first radio bearer group are associated with each other.

Optionally, the operation of determining an association relationship of the radio bearer includes at least one of the following:
in a case that tunnel A is associated with tunnel B, determining at least one of the following: the first radio bearer includes a radio bearer mapped by the tunnel A, and the second radio bearer includes a radio bearer mapped by the tunnel B;
in a case that the first tunnel is tunnel A, the tunnel A is associated with tunnel B, and the tunnel B is associated with tunnel C, determining at least one of the following: the second radio bearer includes a radio bearer mapped by the tunnel B and a radio bearer mapped by the tunnel C;
in a case that tunnel A requires approximate time scheduling together with tunnel B, determining at least one of the following: the first radio bearer includes a radio bearer mapped by the tunnel A, and the second radio bearer includes a radio bearer mapped by the tunnel B;
in a case that tunnel A requires approximate time scheduling together with tunnel B, determining at least one of the following: the first radio bearer includes a radio bearer mapped by the tunnel B, and the second radio bearer includes a radio bearer mapped by the tunnel A;
in a case that tunnel D and tunnel E are associated with each other, generating a first radio bearer group, where the first radio bearer group includes a radio bearer mapped by the tunnel D and a radio bearer mapped by the tunnel E;
in a case that tunnel D requires approximate time scheduling together with tunnel E, generating a first radio bearer group, where the first radio bearer group includes a radio bearer mapped by the tunnel D and a radio bearer mapped by the tunnel E; and
mapping the first radio bearer group for the first tunnel group; where
the first radio bearer is a radio bearer mapped by the first tunnel;
the second radio bearer is at least one of the following: a radio bearer associated with the first radio bearer, and a radio bearer mapped by the second tunnel; and
radio bearers in the first radio bearer group are associated with each other.

Optionally, the performing approximate time scheduling on data in an associated radio bearer includes at least one of the following:
scheduling and/or sending based on a data stamp of a downlink data packet in the radio bearer; and
scheduling and/or receiving based on a data stamp of an uplink data packet in the radio bearer; where
a time difference of scheduling and/or sending downlink data packets in different associated radio bearers does not exceed a time difference for approximate time scheduling;
a time difference of scheduling and/or receiving uplink data packets in different associated radio bearers does not exceed a time difference for approximate time scheduling;
a difference between a time of scheduling and/or sending a downlink data packet in the radio bearer and a time stamp of the downlink data packet does not exceed a time difference for approximate time scheduling; and
a difference between a time of scheduling and/or receiving an uplink data packet in the radio bearer and a time stamp of the uplink data packet does not exceed a time difference for approximate time scheduling.

The service processing apparatus 80 provided in this embodiment of this application can implement the various processes of the method embodiment shown in FIG. 2, with the same technical effects achieved. To avoid repetition, the details are not repeated herein.

Referring to FIG. 9, FIG. 9 is a schematic structural diagram of a service processing apparatus according to an embodiment of this application. The apparatus is applied to a second communication device. As shown in FIG. 9, the service processing apparatus 90 includes:
a second obtaining module 91, configured to obtain second information, where the second information includes at least one of the following: a first request message, and first request information; and
a second execution module 92, configured to perform a second operation based on the second information; where
the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group; and
the first request information includes at least one of the following: coordination requirement information of a first data flow, and coordination requirement information of a first data flow group; where
the coordination requirement information of the first data flow includes at least one of the following:
   description information of the first data flow;
   information of a terminal to which the first data flow corresponds;
   a QoS parameter requested by the first data flow;
   information of the second data flow;
   a time difference interval for approximate time scheduling between the first data flow and the second data flow; and
   sixth indication information, where the sixth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow; and
   the coordination requirement information of the first data flow group includes at least one of the following:
      identifier information of the first data flow group, or a list composed of respective data flow identification information of all data flows in the first data flow group;
      seventh indication information, where the seventh indication information is used to indicate at least one of the following: mapping an independent tunnel for a data flow in the first data flow group, mapping an independent QoS policy for a data flow in the first data flow group, and performing approximate time scheduling for a data flow in the first data flow group;
      a list composed of information of a third data flow; and
      a time difference interval for approximate time scheduling for a data flow in the first data flow group; where
      the second data flow is a data flow associated with the first data flow; and
      the third data flow is a data flow included in the first data flow group; and
      the second operation includes at least one of the following:
         determining a QoS policy for a data flow;
         mapping a first QoS policy group for the first data flow group; and
         sending third information, where the third information includes at least one of the following: a first QoS policy, and a first QoS policy group.

Optionally, the first QoS policy includes at least one of the following: an identifier of the first QoS policy; a QoS parameter of the first QoS policy, information of a second QoS policy, the information of the second data flow, eighth indication information, and a time difference interval for approximate time scheduling; where the eighth indication information is used to indicate at least one of the following: mapping different tunnels for the first QoS policy and the second QoS policy, and mapping an independent tunnel for the first QoS policy; and/or
information of the first QoS policy group includes at least one of the following:
identifier information of the first QoS policy group, or identification information of a QoS policy in the first QoS policy group;
ninth indication information, where the ninth indication information is used to indicate at least one of the following: mapping an independent tunnel for a data flow in the first QoS policy group, mapping an independent tunnel for a QoS policy in the first QoS policy group, performing approximate time scheduling for a data flow in the first QoS policy group, requiring approximate time scheduling for a QoS policy in the first QoS policy group, and requiring approximate time scheduling for respective data flows in all QoS policies in the first QoS policy group;
a time difference interval for approximate time scheduling; and
a list composed of information of a third QoS policy; where
the second QoS policy is a QoS policy associated with the first QoS policy;
the third QoS policy is a QoS policy included in the first QoS policy group; and
the second data flow is a data flow on which the first data flow depends.

In an implementation, the first QoS policy is a QoS policy of the first data flow.

Optionally, the information of the second QoS policy includes at least one of the following: an identifier of the second QoS policy, information of a terminal to which the second QoS policy corresponds, and information of a superior QoS policy to which the second QoS policy belongs; and/or
the information of the third QoS policy includes at least one of the following: an identifier of the third QoS policy, information of a terminal to which the third QoS policy corresponds, and tenth indication information; where the tenth indication information is used to indicate: mapping an independent tunnel for the third QoS policy; and/or
the identification information of the QoS policy includes at least one of the following: an identifier of the QoS policy, information of a terminal to which the QoS policy corresponds, and information of a superior QoS policy to which the QoS policy belongs.

Optionally, the determining a QoS policy for a data flow includes at least one of the following:
determining an association relationship of the QoS policy;
mapping different QoS policies for different data flows having an association relationship;
mapping different QoS policies for the first data flow and the second data flow,
mapping an independent QoS policy for the first data flow;
mapping an independent QoS policy for a data flow in the first service data group;
in a case that a QoS identifier mapped by a QoS parameter requested by the first data flow is the same as a QoS identifier mapped by a QoS parameter requested by the second data flow, performing at least one of the following: skipping mapping the QoS identifiers, mapping a QoS parameter in the first data flow request to a QoS parameter in the QoS policy, where the mapped QoS parameter of the QoS policy does not include a QoS identifier, and mapping a QoS parameter in the second data flow request to a QoS parameter in the QoS policy, where the mapped QoS parameter of the QoS policy does not include a QoS identifier; and
in a case that QoS identifiers mapped by QoS parameters requested by two or more data flows in the first data flow group are the same, performing at least one of the following: skipping mapping the QoS identifiers, and mapping a QoS parameter in the data flow request to a QoS parameter in the QoS policy, where the mapped QoS parameter in the QoS policy does not include a QoS identifier.

Optionally, the determining an association relationship of a QoS policy includes at least one of the following:
in a case that data flow A is associated with data flow B, determining at least one of the following: the first QoS policy includes a QoS policy mapped by the data flow A, and the second QoS policy includes a QoS policy mapped by the data flow B;
in a case that the first data flow is data flow A, the data flow A is associated with data flow B, and the data flow B is associated with data flow C, determining at least one of the following: the second QoS policy includes a QoS policy mapped by the data flow B and a QoS policy mapped by the data flow C;
in a case that data flow A requires approximate time scheduling together with data flow B, determining at least one of the following: the first QoS policy includes a QoS policy mapped by the data flow A, and the second QoS policy includes a QoS policy mapped by the data flow B;
in a case that data flow A requires approximate time scheduling together with data flow B, determining at least one of the following: the first QoS policy includes a QoS policy mapped by the data flow B, and the second QoS policy includes a QoS policy mapped by the data flow A;
in a case that data flow D is associated with data flow E, generating a first QoS policy group, where the first QoS policy group includes a QoS policy mapped by the data flow D and a QoS policy mapped by the data flow E;
in a case that data flow D requires approximate time scheduling together with data flow E, generating a first QoS policy group, where the first QoS policy group includes a QoS policy mapped by the data flow D and a QoS policy mapped by the data flow E; and
mapping a first QoS policy group for the first data flow group; where
the first QoS policy is a QoS policy mapped by the first data flow;
the second QoS policy is at least one of the following: a QoS policy associated with the first QoS policy, and a QoS policy mapped by the second data flow; and
QoS policies in the first QoS policy group are associated with each other.

Optionally, the operation of mapping a first QoS policy group for the first data flow group includes: the first QoS policy group includes the information of the third QoS policy; where
the third QoS policy is a QoS policy mapped by the third data flow; and
the third data flow is a data flow included in the first data flow group.

The service processing apparatus 90 provided in this embodiment of this application can implement the various processes of the method embodiment shown in FIG. 3, with the same technical effects achieved. To avoid repetition, the details are not repeated herein.

Referring to FIG. 10, FIG. 10 is a schematic structural diagram of a service processing apparatus according to an embodiment of this application. The apparatus is applied to a third communication device. As shown in FIG. 10, the service processing apparatus 100 includes:
a third obtaining module 101, configured to obtain third information, where the third information includes at least one of the following: a first QoS policy, and a first QoS policy group; and
a third execution module 102, configured to perform a third operation based on the third information; where
the first QoS policy includes at least one of the following: an identifier of the first QoS policy; a QoS parameter of the first QoS policy, information of a second QoS policy, information of a second data flow, eighth indication information, and a time difference interval for approximate time scheduling; where the eighth indication information is used to indicate at least one of the following: mapping different tunnels for the first QoS policy and the second QoS policy, and mapping an independent tunnel for the first QoS policy; and
information of the first QoS policy group includes at least one of the following:
   identifier information of the first QoS policy group, or a list composed of respective QoS policy identification information of all QoS policies in the first QoS policy group;
   ninth indication information, where the ninth indication information is used to indicate at least one of the following: mapping an independent tunnel for a data flow in the first QoS policy group, mapping an independent tunnel for a QoS policy in the first QoS policy group, performing approximate time scheduling for a data flow in the first QoS policy group, and requiring approximate time scheduling for a QoS policy in the first QoS policy group;
   a time difference interval for approximate time scheduling; and
   a list composed of information of a third QoS policy; where
   the second QoS policy is a QoS policy associated with the first QoS policy;
   the third QoS policy is a QoS policy included in the first QoS policy group; and
   the second data flow is a data flow on which the first data flow depends;

In an implementation, the first QoS policy is a QoS policy of the first data flow.

The third operation includes at least one of the following:
determining a tunnel for a data flow;
determining a tunnel for a QoS policy;
determining an association relationship of a tunnel; and
sending coordination configuration information, where the coordination configuration information includes at least one of the following: coordination configuration information of a first tunnel, coordination configuration information of a second tunnel, and coordination configuration information of a first tunnel group.

Optionally, the coordination configuration information of the first tunnel includes at least one of the following: an identifier of the first tunnel, a QoS parameter of the first tunnel, information of a second tunnel, first indication information, and a time difference interval for approximate time scheduling; where the first indication information is used to indicate at least one of the following: mapping different radio bearers for the first tunnel and the second tunnel, mapping an independent radio bearer for the first tunnel, and requiring approximate time scheduling for the first tunnel and the second tunnel; and/or
the coordination configuration information of the first tunnel group includes at least one of the following:
identifier information of the first tunnel group, or a list composed of respective tunnel identification information of all tunnels in the first tunnel group;
second indication information, where the second indication information is used to indicate at least one of the following: mapping an independent radio bearer for a data flow in the first tunnel group, mapping an independent radio bearer for a tunnel in the first tunnel group, and requiring approximate time scheduling for a tunnel in the first tunnel group;
a time difference interval for approximate time scheduling; and
a list composed of information of a third tunnel; where
the second tunnel is a tunnel associated with the first tunnel;
the third tunnel is any tunnel in the first tunnel group; and
the first tunnel is a tunnel mapped by the first QoS policy.

Optionally, the information of the second tunnel includes at least one of the following: an identifier of the second tunnel, information of a terminal to which the second tunnel corresponds, and information of a superior tunnel to which the second tunnel corresponds; and/or
the information of the third tunnel includes at least one of the following: an identifier of the third tunnel, information of a terminal to which the third tunnel corresponds, and third indication information; where the third indication information is used to indicate: mapping an independent radio bearer for the third tunnel; and/or
the tunnel identification information includes at least one of the following: an identifier of the tunnel, information of a terminal to which the tunnel corresponds, and information of a superior tunnel to which the tunnel corresponds.

Optionally, the determining a tunnel for a QoS policy includes at least one of the following:
determining an association relationship of the tunnel;
mapping different tunnels for different QoS policies having an association relationship;
mapping different tunnels for the first QoS policy and the second QoS policy;
mapping an independent tunnel for the first QoS policy; and
mapping an independent tunnel for a QoS policy in the first service data group.

Optionally, the operation of determining an association relationship of the tunnel includes at least one of the following:
in a case that QoS policy A is associated with QoS policy B, determining at least one of the following: the first tunnel includes a tunnel mapped by the QoS policy A, and the second tunnel includes a tunnel mapped by the QoS policy B;
in a case that the first QoS policy is QoS policy A, the QoS policy A is associated with QoS policy B, and the QoS policy B is associated with QoS policy C, determining at least one of the following: the second tunnel includes a tunnel mapped by the QoS policy B and a tunnel mapped by the QoS policy C;
in a case that QoS policy A requires approximate time scheduling together with QoS policy B, determining at least one of the following: the first tunnel includes a tunnel mapped by the QoS policy A, and the second tunnel includes a tunnel mapped by the QoS policy B;
in a case that QoS policy A requires approximate time scheduling together with QoS policy B, determining at least one of the following: the first tunnel includes a tunnel mapped by the QoS policy B, and the second tunnel includes a tunnel mapped by the QoS policy A;
in a case that QoS policy D is associated with QoS policy E, generating a first tunnel group, where the first tunnel group includes a tunnel mapped by the QoS policy D and a tunnel mapped by the QoS policy E;
in a case that QoS policy D requires approximate time scheduling together with QoS policy E, generating a first tunnel group, where the first tunnel group includes a tunnel mapped by the QoS policy D and a tunnel mapped by the QoS policy E; and
mapping the first tunnel group for the first QoS policy group; where
the first tunnel is a tunnel mapped by the first QoS policy;
the second tunnel is at least one of the following: a tunnel associated with the first tunnel, and a tunnel mapped by the second QoS policy; and
tunnels in the first tunnel group are associated with each other.

Optionally, the determining a tunnel for a data flow includes at least one of the following:
determining an association relationship of the tunnel;
mapping different tunnels for the first service data and the second service data;
mapping an independent tunnel for the first service data; and
mapping an independent tunnel for service data in the first service data group.

Optionally, the determining an association relationship of the tunnel includes at least one of the following:
in a case that data flow A is associated with data flow B, determining at least one of the following: the first tunnel includes a tunnel mapped by the data flow A, and the second tunnel includes a tunnel mapped by the data flow B;
in a case that the first data flow is data flow A, the data flow A is associated with data flow B, and the data flow B is associated with data flow C, determining at least one of the following: the second tunnel includes a tunnel mapped by the data flow B and a tunnel mapped by the data flow C;
in a case that data flow A requires approximate time scheduling together with data flow B, determining at least one of the following: the first tunnel includes a tunnel mapped by the data flow A, and the second tunnel includes a tunnel mapped by the data flow B;
in a case that data flow A requires approximate time scheduling together with data flow B, determining at least one of the following: the first tunnel includes a tunnel mapped by the data flow B, and the second tunnel includes a tunnel mapped by the data flow A;
in a case that data flow D is associated with data flow E, generating a first tunnel group, where the first tunnel group includes a tunnel mapped by the data flow D and a tunnel mapped by the data flow E;
in a case that data flow D requires approximate time scheduling together with data flow E, generating a first tunnel group, where the first tunnel group includes a tunnel mapped by the data flow D and a tunnel mapped by the data flow E; and
mapping the first tunnel group for a first data flow group; where
the first tunnel is a tunnel mapped by the first data flow; and
the second tunnel is at least one of the following: a tunnel associated with the first tunnel, and a tunnel mapped by the second data flow; and tunnels in the first tunnel group are associated with each other.

Optionally, the operation of mapping the first tunnel group for a first data flow group includes: the first tunnel group includes a third tunnel; where the third tunnel is one of the following: a tunnel mapped by a third data flow, and a tunnel mapped by the third QoS policy; the third data flow is any data flow included in the first data flow group; and the third QoS policy is any QoS policy included in the first QoS policy group.

Optionally, the operation of mapping the first tunnel group for the first QoS policy group includes: the first tunnel group includes a third tunnel; where the third tunnel is one of the following: a tunnel mapped by a third data flow, and a tunnel mapped by the third QoS policy; the third data flow is any data flow included in the first data flow group; and the third QoS policy is any QoS policy included in the first QoS policy group.

The service processing apparatus 100 provided in this embodiment of this application can implement the various processes of the method embodiment shown in FIG. 4, with the same technical effects achieved. To avoid repetition, the details are not repeated herein.

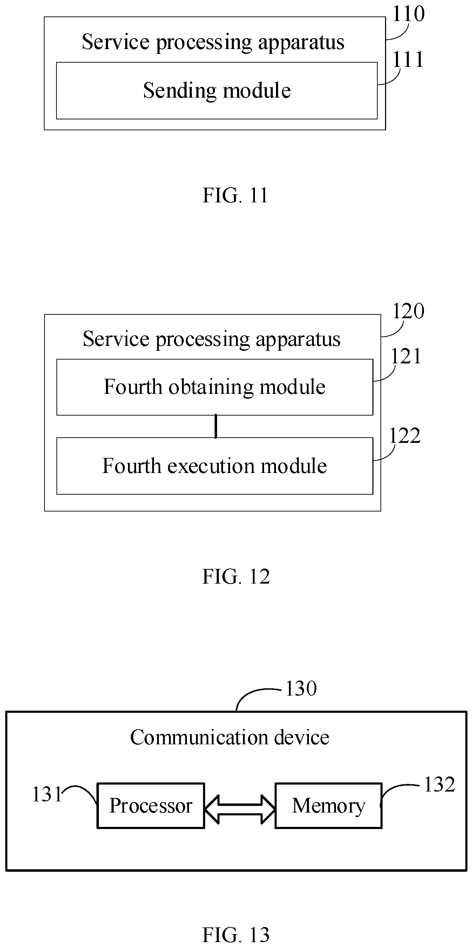

Referring to FIG. 11, FIG. 11 is a schematic structural diagram of a service processing apparatus according to an embodiment of this application. The apparatus is applied to a fourth communication device. As shown in FIG. 11, the service processing apparatus 110 includes:
a sending module 111, configured to send second information; where
the second information includes at least one of the following: a first request message, and first request information;
the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group; and
the first request information includes at least one of the following: coordination requirement information of a first data flow, and coordination requirement information of a first data flow group; where
the coordination requirement information of the first data flow includes at least one of the following:
   description information of the first data flow;
   information of a terminal to which the first data flow corresponds;
   a QoS parameter requested by the first data flow;
   information of the second data flow;
   a time difference interval for approximate time scheduling between the first data flow and the second data flow; and
   fourth indication information, where the fourth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow; and
   the coordination requirement information of the first data flow group includes at least one of the following:
      identifier information of the first data flow group, or a list composed of respective data flow identification information of all data flows in the first data flow group;
      fifth indication information, where the fifth indication information is used to indicate at least one of the following: mapping an independent tunnel for a data flow in the first data flow group, mapping an independent QoS policy for a data flow in the first data flow group, and performing approximate time scheduling for a data flow in the first data flow group;
      a list composed of information of a third data flow; and
      a time difference interval for approximate time scheduling for a data flow in the first data flow group; where
      the second data flow is a data flow associated with the first data flow; and
      the third data flow is a data flow included in the first data flow group.

Optionally, the first request information is included in the first request message.

Optionally, the information of the second data flow includes at least one of the following: description information of the second data flow, information of a terminal to which the second data flow corresponds, and a QoS parameter requested by the second data flow; and/or
the information of the third data flow includes at least one of the following: description information of the third data flow, information of a terminal to which the third data flow corresponds, a QoS parameter requested by the third data flow, and eleventh indication information; where the eleventh indication information is used to indicate at least one of the following: mapping an independent tunnel for the third data flow, and mapping an independent QoS policy for the third data flow.

Optionally, any two or more data flows in the first data flow group correspond to one of the following: the same terminal, different terminals, the same application server, and different application servers.

Optionally, the data flow identification information includes at least one of the following: description information of the data flow, and information of a terminal to which the data flow corresponds.

The service processing apparatus 110 provided in this embodiment of this application can implement the various processes of the method embodiment shown in FIG. 5, with the same technical effects achieved. To avoid repetition, the details are not repeated herein.

Referring to FIG. 12, FIG. 12 is a schematic structural diagram of a service processing apparatus according to an embodiment of this application. The apparatus is applied to a fifth communication device. As shown in FIG. 12, the service processing apparatus 120 includes:
a fourth obtaining module 121, configured to obtain first information, where the first information includes at least one of the following: coordination configuration information of a first radio bearer, and coordination configuration information of a first radio bearer group; and
a fourth execution module 122, configured to perform a fifth operation based on the first information; where
the coordination configuration information of the first radio bearer includes at least one of the following: an identifier of the first radio bearer, information of a second radio bearer, third indication information, and a time difference interval for approximate time scheduling; where the third indication information is used to indicate at least one of the following: requiring approximate time scheduling for the first radio bearer and the second radio bearer; and
the coordination configuration information of the first radio bearer group includes at least one of the following:
   identifier information of the first radio bearer group, or a list composed of respective radio bearer identification information of all radio bearers in the first radio bearer group;
   information of a first tunnel group mapped by the first radio bearer group;
   fourth indication information, where the fourth indication information is used to indicate at least one of the following: a radio bearer in the first radio bearer group that requires approximate time scheduling;
   a time difference interval for approximate time scheduling; and
   information of a third radio bearer; where
   the second radio bearer is one of the following: a radio bearer associated with the first radio bearer, and a radio bearer that requires approximate time scheduling together with the first radio bearer; and
   the third radio bearer is any radio bearer mapped by the first radio bearer group;
   and the fifth operation includes at least one of the following:
      requesting approximate time scheduling on data in an associated radio bearer; and
      adding information of the first tunnel group to which a radio bearer is mapped to a header of a data packet in the radio bearer; and
      adding information of the first radio bearer group to which a radio bearer corresponds to a header of a data packet in the radio bearer.

Optionally, the information of the first tunnel group includes at least one of the following:
identifier information of the first tunnel group, or a list composed of respective tunnel identification information of all tunnels in the first tunnel group; and
indication information used to indicate at least one of the following: performing approximate time scheduling on data in the first tunnel group.

Optionally, the information of the first radio bearer group includes at least one of the following:
identifier information of the first radio bearer group, or a list composed of respective radio bearer identification information of all radio bearers in the first radio bearer group; and
indication information used to indicate at least one of the following: performing approximate time scheduling on data in the first radio bearer group.

The service processing apparatus 120 provided in this embodiment of this application can implement the various processes of the method embodiment shown in FIG. 6, with the same technical effects achieved. To avoid repetition, the details are not repeated herein.

Optionally, as shown in FIG. 13, an embodiment of this application further provides a communication device 130 including a processor 131 and a memory 132, where the memory 132 stores a program or instructions capable of running on the processor 131, and when the program or instructions are executed by the processor 131, the steps of the foregoing service processing method embodiments are implemented, with the same technical effects achieved. To avoid repetition, the details are not repeated herein.

An embodiment of this application further provides a readable storage medium, where the readable storage medium stores a program or instructions, and when the program or instructions are executed by a processor, the processes of the foregoing service processing method embodiments can be implemented, with same technical effects achieved. To avoid repetition, the details are not described herein again.

The processor is a processor in the terminal described in the foregoing embodiments. The readable storage medium includes a computer-readable storage medium, for example, a computer read-only memory ROM, a random access memory RAM, a magnetic disk, or an optical disk.

An embodiment of this application further provides a chip. The chip includes a processor and a communication interface, where the communication interface is coupled to the processor, and the processor is configured to run a program or instructions to implement the processes of the foregoing service processing method embodiments, with the same technical effect achieved. To avoid repetition, the details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing service processing method embodiments, with the same technical effects achieved. To avoid repetition, the details are not repeated herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A service processing method, comprising:
obtaining, by a first communication device, coordination configuration information, wherein the coordination configuration information comprises at least one of the following: coordination configuration information of a first tunnel, coordination configuration information of a second tunnel, and coordination configuration information of a first tunnel group; and
performing, by the first communication device, a first operation based on the coordination configuration information; wherein
the coordination configuration information of the first tunnel comprises at least one of the following: an identifier of the first tunnel, a quality of service QoS parameter of the first tunnel, information of the second tunnel, first indication information, and a time difference interval for approximate time scheduling; wherein
the first indication information is used to indicate at least one of the following: mapping different radio bearers for the first tunnel and the second tunnel, mapping an independent radio bearer for the first tunnel, and requiring approximate time scheduling for the first tunnel and the second tunnel;
the coordination configuration information of the first tunnel group comprises at least one of the following:
identifier information of the first tunnel group, or a list composed of respective tunnel identification information of all tunnels in the first tunnel group;
second indication information, wherein the second indication information is used to indicate at least one of the following: mapping an independent radio bearer for a data flow in the first tunnel group, mapping an independent radio bearer for a tunnel in the first tunnel group, and requiring approximate time scheduling for a tunnel in the first tunnel group;
a time difference interval for approximate time scheduling; and
a list composed of information of a third tunnel; wherein
the second tunnel is one of the following: a tunnel associated with the first tunnel, and a tunnel that requires approximate time scheduling together with the first tunnel; and
the third tunnel is a tunnel comprised in the first tunnel group; and
the first operation comprises at least one of the following:
determining a radio bearer for a tunnel;
determining an association relationship of a radio bearer;
performing approximate time scheduling on data in an associated radio bearer;
requesting approximate time scheduling on data in an associated radio bearer; and
sending first information, wherein the first information comprises at least one of the following: coordination configuration information of the first radio bearer, and coordination configuration information of a first radio bearer group.

2. The method according to claim 1, wherein
the coordination configuration information of the first radio bearer comprises at least one of the following: an identifier of the first radio bearer, information of a second radio bearer, third indication information, and a time difference interval for approximate time scheduling; wherein the third indication information is used to indicate at least one of the following: requiring approximate time scheduling for the first radio bearer and the second radio bearer; and/or
the coordination configuration information of the first radio bearer group comprises at least one of the following:
identifier information of the first radio bearer group, or a list composed of respective radio bearer identification information of all radio bearers in the first radio bearer group;
information of the first tunnel group mapped by the first radio bearer group;
fourth indication information, wherein the fourth indication information is used to indicate at least one of the following: a radio bearer in the first radio bearer group that requires approximate time scheduling;
a time difference interval for approximate time scheduling; and
information of the third radio bearer; wherein
the second radio bearer is one of the following: a radio bearer associated with the first radio bearer, and a radio bearer that requires approximate time scheduling together with the first radio bearer; and
the third radio bearer is any radio bearer in the first radio bearer group.

3. The method according to claim 1, wherein
the information of the second tunnel comprises at least one of the following: an identifier of the second tunnel, information of a terminal to which the second tunnel corresponds, and information of a superior tunnel to which the second tunnel belongs; and/or
the information of the third tunnel comprises at least one of the following: an identifier of the third tunnel, information of a terminal to which the third tunnel corresponds, and fifth indication information; wherein the fifth indication information is used to indicate: mapping an independent radio bearer for the third tunnel; and/or
the tunnel identification information comprises at least one of the following: an identifier of the tunnel, information of a terminal to which the tunnel corresponds, and information of a superior tunnel to which the tunnel corresponds.

4. The method according to claim 1, wherein the determining a radio bearer for a tunnel comprises at least one of the following:
determining an association relationship of a radio bearer;
mapping different radio bearers for different tunnels having an association relationship;
mapping different radio bearers for the first tunnel and the second tunnel;
mapping an independent radio bearer for the first tunnel; and
mapping an independent radio bearer for a tunnel in the first tunnel group; and
mapping an independent first radio bearer group for the first tunnel group, wherein radio bearers in the first radio bearer group are associated with each other.

5. The method according to claim 1 or 4, wherein the operation of determining an association relationship of a radio bearer comprises at least one of the following:
in a case that tunnel A is associated with tunnel B, determining at least one of the following: the first radio bearer comprises a radio bearer mapped by the tunnel A, and the second radio bearer comprises a radio bearer mapped by the tunnel B;
in a case that the first tunnel is tunnel A, the tunnel A is associated with tunnel B, and the tunnel B is associated with tunnel C, determining at least one of the following: the second radio bearer comprises a radio bearer mapped by the tunnel B and a radio bearer mapped by the tunnel C;
in a case that tunnel A requires approximate time scheduling together with tunnel B, determining at least one of the following: the first radio bearer comprises a radio bearer mapped by the tunnel A, and the second radio bearer comprises a radio bearer mapped by the tunnel B;
in a case that tunnel A requires approximate time scheduling together with tunnel B, determining at least one of the following: the first radio bearer comprises a radio bearer mapped by the tunnel B, and the second radio bearer comprises a radio bearer mapped by the tunnel A;
in a case that tunnel D and tunnel E are associated with each other, generating a first radio bearer group, wherein the first radio bearer group comprises a radio bearer mapped by the tunnel D and a radio bearer mapped by the tunnel E;
in a case that tunnel D requires approximate time scheduling together with tunnel E, generating a first radio bearer group, wherein the first radio bearer group comprises a radio bearer mapped by the tunnel D and a radio bearer mapped by the tunnel E; and
mapping a first radio bearer group for the first tunnel group; wherein
the first radio bearer is a radio bearer mapped by the first tunnel;
the second radio bearer is at least one of the following: a radio bearer associated with the first radio bearer, and a radio bearer mapped by the second tunnel; and
radio bearers in the first radio bearer group are associated with each other.

6. The method according to claim 1, wherein the performing approximate time scheduling on data of an associated radio bearer comprises at least one of the following:
scheduling and/or sending based on a data stamp of a downlink data packet in the radio bearer; and
scheduling and/or receiving based on a data stamp of an uplink data packet in the radio bearer; wherein
a time difference of scheduling and/or sending downlink data packets in different associated radio bearers does not exceed a time difference for approximate time scheduling;
a time difference of scheduling and/or receiving uplink data packets in different associated radio bearers does not exceed a time difference for approximate time scheduling;
a difference between a time of scheduling and/or sending a downlink data packet in the radio bearer and a time stamp of the downlink data packet does not exceed a time difference for approximate time scheduling; and
a difference between a time of scheduling and/or receiving an uplink data packet in the radio bearer and a time stamp of the uplink data packet does not exceed a time difference for approximate time scheduling.

7. A service processing method, comprising:
obtaining, by a second communication device, second information, wherein the second information comprises at least one of the following: a first request message, and first request information; and
performing, by the second communication device, a second operation based on the second information; wherein
the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group; and
the first request information comprises at least one of the following: coordination requirement information of a first data flow, and coordination requirement information of a first data flow group;
the coordination requirement information of the first data flow comprises at least one of the following:
description information of the first data flow;
information of a terminal to which the first data flow corresponds;
a QoS parameter requested by the first data flow;
information of the second data flow;
a time difference interval for approximate time scheduling between the first data flow and the second data flow;
sixth indication information, wherein the sixth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow; and
the coordination requirement information of the first data flow group comprises at least one of the following:
identifier information of the first data flow group, or a list composed of respective data flow identification information of all data flows in the first data flow group;
seventh indication information, wherein the seventh indication information is used to indicate at least one of the following: mapping an independent tunnel for a data flow in the first data flow group, mapping an independent QoS policy for a data flow in the first data flow group, and performing approximate time scheduling for a data flow in the first data flow group;
a list composed of information of a third data flow; and
a time difference interval for approximate time scheduling for a data flow in the first data flow group; wherein
the second data flow is a data flow associated with the first data flow; and
the third data flow is a data flow comprised in the first data flow group; and
the second operation comprises at least one of the following:
determining a QoS policy for a data flow;
mapping a first QoS policy group for the first data flow group; and
sending third information, wherein the third information comprises at least one of the following: a first QoS policy, and a first QoS policy group.

8. The method according to claim 7, wherein
the first QoS policy comprises at least one of the following: an identifier of the first QoS policy; a QoS parameter of the first QoS policy, information of a second QoS policy, information of the second data flow, eighth indication information, and a time difference interval for approximate time scheduling; wherein the eighth indication information is used to indicate at least one of the following: mapping different tunnels for the first QoS policy and the second QoS policy, and mapping an independent tunnel for the first QoS policy; and/or
information of the first QoS policy group comprises at least one of the following:
identifier information of the first QoS policy group, or identification information of a QoS policy in the first QoS policy group;
ninth indication information, wherein the ninth indication information is used to indicate at least one of the following: mapping an independent tunnel for a data flow in the first QoS policy group, mapping an independent tunnel for a QoS policy in the first QoS policy group, performing approximate time scheduling for a data flow in the first QoS policy group, requiring approximate time scheduling for a QoS policy in the first QoS policy group, and requiring approximate time scheduling for respective data flows in all QoS policies in the first QoS policy group;
a time difference interval for approximate time scheduling; and
a list composed of information of a third QoS policy; wherein
the second QoS policy is a QoS policy associated with the first QoS policy;
the third QoS policy is a QoS policy comprised in the first QoS policy group; and
the second data flow is a data flow on which the first data flow depends.

9. The method according to claim 8, wherein the information of the second QoS policy comprises at least one of the following: an identifier of the second QoS policy, information of a terminal to which the second QoS policy corresponds, and information of a superior QoS policy to which the second QoS policy belongs; and/or
the information of the third QoS policy comprises at least one of the following: an identifier of the third QoS policy, information of a terminal to which the third QoS policy corresponds, and tenth indication information; wherein the tenth indication information is used to indicate: mapping an independent tunnel for the third QoS policy; and/or
the identification information of the QoS policy comprises at least one of the following: an identifier of the QoS policy, information of a terminal to which the QoS policy corresponds, and information of a superior QoS policy to which the QoS policy belongs.

10. The method according to claim 7, wherein the determining a QoS policy for a tunnel comprises at least one of the following:
determining an association relationship of the QoS policy;
mapping different QoS policies for different data flows having an association relationship;
mapping different QoS policies for the first data flow and the second data flow;
mapping an independent QoS policy for the first data flow;
mapping an independent QoS policy for a data flow in the first service data group;
in a case that a QoS identifier mapped by a QoS parameter requested by the first data flow is the same as a QoS identifier mapped by a QoS parameter requested by the second data flow, performing at least one of the following: skipping mapping the QoS identifiers, mapping a QoS parameter in the first data flow request to a QoS parameter in the QoS policy, wherein the mapped QoS parameter of the QoS policy does not comprise a QoS identifier, and mapping a QoS parameter in the second data flow request to a QoS parameter in the QoS policy, wherein the mapped QoS parameter of the QoS policy does not comprise a QoS identifier; and
in a case that QoS identifiers mapped by QoS parameters requested by two or more data flows in the first data flow group are the same, performing at least one of the following: skipping mapping the QoS identifiers, and mapping a QoS parameter in the data flow request to a QoS parameter in the QoS policy, wherein the mapped QoS parameter in the QoS policy does not comprise a QoS identifier.

11. The method according to claim 7 or 10, wherein the determining an association relationship of the QoS policy comprises at least one of the following:
in a case that data flow A is associated with data flow B, determining at least one of the following: a first QoS policy comprises a QoS policy mapped by the data flow A, and a second QoS policy comprises a QoS policy mapped by the data flow B;
in a case that the first data flow is data flow A, the data flow A is associated with data flow B, and the data flow B is associated with data flow C, determining at least one of the following: the second QoS policy comprises a QoS policy mapped by the data flow B and a QoS policy mapped by the data flow C;
in a case that data flow A requires approximate time scheduling together with data flow B, determining at least one of the following: a first QoS policy comprises a QoS policy mapped by the data flow A, and a second QoS policy comprises a QoS policy mapped by the data flow B;
in a case that data flow A requires approximate time scheduling together with data flow B, determining at least one of the following: a first QoS policy comprises a QoS policy mapped by the data flow B, and a second QoS policy comprises a QoS policy mapped by the data flow A;
in a case that data flow D is associated with data flow E, generating a first QoS policy group, wherein the first QoS policy group comprises a QoS policy mapped by the data flow D and a QoS policy mapped by the data flow E;
in a case that data flow D requires approximate time scheduling together with data flow E, generating a first QoS policy group, wherein the first QoS policy group comprises a QoS policy mapped by the data flow D and a QoS policy mapped by the data flow E; and
mapping a first QoS policy group for the first data flow group; wherein
the first QoS policy is a QoS policy mapped by the first data flow;
the second QoS policy is at least one of the following: a QoS policy associated with the first QoS policy, and a QoS policy mapped by the second data flow; and
QoS policies in the first QoS policy group are associated with each other.

12. The method according to claim 7, wherein the operation of mapping a first QoS policy group for the first data flow group comprises: the first QoS policy group comprises information of a third QoS policy; wherein
the third QoS policy is a QoS policy mapped by the third data flow; and
the third data flow is a data flow comprised in the first data flow group.

13. A service processing method, comprising:
obtaining, by a third communication device, third information, wherein the third information comprises at least one of the following: a first QoS policy, and a first QoS policy group; and
performing, by the third communication device, a third operation based on the third information; wherein
the first QoS policy comprises at least one of the following: an identifier of the first QoS policy; a QoS parameter of the first QoS policy, information of a second QoS policy, information of a second data flow, eighth indication information, and a time difference interval for approximate time scheduling; wherein the eighth indication information is used to indicate at least one of the following: mapping different tunnels for the first QoS policy and the second QoS policy, and mapping an independent tunnel for the first QoS policy;
information of the first QoS policy group comprises at least one of the following:
identifier information of the first QoS policy group, or a list composed of respective QoS policy identification information of all QoS policies in the first QoS policy group;
ninth indication information, wherein the ninth indication information is used to indicate at least one of the following: mapping an independent tunnel for a data flow in the first QoS policy group, mapping an independent tunnel for a QoS policy in the first QoS policy group, performing approximate time scheduling for a data flow in the first QoS policy group, and requiring approximate time scheduling for a QoS policy in the first QoS policy group;
a time difference interval for approximate time scheduling; and
a list composed of information of a third QoS policy; wherein
the second QoS policy is a QoS policy associated with the first QoS policy;
the third QoS policy is a QoS policy comprised in the first QoS policy group; and
the second data flow is a data flow on which the first data flow depends; and
the third operation comprises at least one of the following:
determining a tunnel for a data flow;
determining a tunnel for a QoS policy;
determining an association relationship of a tunnel; and
sending coordination configuration information, wherein the coordination configuration information comprises at least one of the following: coordination configuration information of a first tunnel, coordination configuration information of a second tunnel, and coordination configuration information of a first tunnel group.

14. The method according to claim 13, wherein
the coordination configuration information of the first tunnel comprises at least one of the following: an identifier of the first tunnel, a QoS parameter of the first tunnel, information of a second tunnel, first indication information, and a time difference interval for approximate time scheduling; wherein the first indication information is used to indicate at least one of the following: mapping different radio bearers for the first tunnel and the second tunnel, mapping an independent radio bearer for the first tunnel, and requiring approximate time scheduling for the first tunnel and the second tunnel; and/or
the coordination configuration information of the first tunnel group comprises at least one of the following:
identifier information of the first tunnel group, or a list composed of respective tunnel identification information of all tunnels in the first tunnel group;
second indication information, wherein the second indication information is used to indicate at least one of the following: mapping an independent radio bearer for a data flow in the first tunnel group, mapping an independent radio bearer for a tunnel in the first tunnel group, and requiring approximate time scheduling for a tunnel in the first tunnel group;
a time difference interval for approximate time scheduling; and
a list composed of information of a third tunnel; wherein
the second tunnel is a tunnel associated with the first tunnel;
the third tunnel is any tunnel in the first tunnel group; and
the first tunnel is a tunnel mapped by the first QoS policy.

15. The method according to claim 14, wherein
the information of the second tunnel comprises at least one of the following: an identifier of the second tunnel, information of a terminal to which the second tunnel corresponds, and information of a superior tunnel to which the second tunnel belongs; and/or
the information of the third tunnel comprises at least one of the following: an identifier of the third tunnel, information of a terminal to which the third tunnel corresponds, and third indication information; wherein the third indication information is used to indicate: mapping an independent radio bearer for the third tunnel; and/or
the tunnel identification information comprises at least one of the following: an identifier of the tunnel, information of a terminal to which the tunnel corresponds, and information of a superior tunnel to which the tunnel corresponds.

16. The method according to claim 13, wherein the determining a tunnel for a QoS policy comprises at least one of the following:
determining an association relationship of a tunnel;
mapping different tunnels for different QoS policies having an association relationship;
mapping different tunnels for the first QoS policy and the second QoS policy;
mapping an independent tunnel for the first QoS policy; and
mapping an independent tunnel for a QoS policy in the first service data group.

17. The method according to claim 13 or 16, wherein the operation of determining an association relationship of a tunnel comprises at least one of the following:
in a case that QoS policy A is associated with QoS policy B, determining at least one of the following: the first tunnel comprises a tunnel mapped by the QoS policy A, and the second tunnel comprises a tunnel mapped by the QoS policy B;
in a case that the first QoS policy is QoS policy A, the QoS policy A is associated with QoS policy B, and the QoS policy B is associated with QoS policy C, determining at least one of the following: the second tunnel comprises a tunnel mapped by the QoS policy B and a tunnel mapped by the QoS policy C;
in a case that QoS policy A requires approximate time scheduling together with QoS policy B, determining at least one of the following: the first tunnel comprises a tunnel mapped by the QoS policy A, and the second tunnel comprises a tunnel mapped by the QoS policy B;
in a case that QoS policy A requires approximate time scheduling together with QoS policy B, determining at least one of the following: the first tunnel comprises a tunnel mapped by the QoS policy B, and the second tunnel comprises a tunnel mapped by the QoS policy A;
in a case that QoS policy D is associated with QoS policy E, generating a first tunnel group, wherein the first tunnel group comprises a tunnel mapped by the QoS policy D and a tunnel mapped by the QoS policy E;
in a case that QoS policy D requires approximate time scheduling together with QoS policy E, generating a first tunnel group, wherein the first tunnel group comprises a tunnel mapped by the QoS policy D and a tunnel mapped by the QoS policy E; and
mapping the first tunnel group for a first QoS policy group; wherein
the first tunnel is a tunnel mapped by the first QoS policy;
the second tunnel is at least one of the following: a tunnel associated with the first tunnel, and a tunnel mapped by the second QoS policy; and
tunnels in the first tunnel group are associated with each other.

18. The method according to claim 13, wherein the determining a tunnel for the data flow comprises at least one of the following:
determining an association relationship of a tunnel;
mapping different tunnels for the first service data and the second service data;
mapping an independent tunnel for the first service data; and
mapping an independent tunnel for service data in the first service data group.

19. The method according to claim 13 or 18, wherein the determining an association relationship of a tunnel comprises at least one of the following:
in a case that data flow A is associated with data flow B, determining at least one of the following: the first tunnel comprises a tunnel mapped by the data flow A, and the second tunnel comprises a tunnel mapped by the data flow B;
in a case that the first data flow is data flow A, the data flow A is associated with data flow B, and the data flow B is associated with data flow C, determining at least one of the following: the second tunnel comprises a tunnel mapped by the data flow B and a tunnel mapped by the data flow C;
in a case that data flow A requires approximate time scheduling together with data flow B, determining at least one of the following: the first tunnel comprises a tunnel mapped by the data flow A, and the second tunnel comprises a tunnel mapped by the data flow B;
in a case that data flow A requires approximate time scheduling together with data flow B, determining at least one of the following: the first tunnel comprises a tunnel mapped by the data flow B, and the second tunnel comprises a tunnel mapped by the data flow A;
in a case that data flow D is associated with data flow E, generating a first tunnel group, wherein the first tunnel group comprises a tunnel mapped by the data flow D and a tunnel mapped by the data flow E;
in a case that data flow D requires approximate time scheduling together with data flow E, generating a first tunnel group, wherein the first tunnel group comprises a tunnel mapped by the data flow D and a tunnel mapped by the data flow E; and
mapping the first tunnel group for a first data flow group; wherein
the first tunnel is a tunnel mapped by the first data flow;
the second tunnel is at least one of the following: a tunnel associated with the first tunnel, and a tunnel mapped by the second data flow; and
tunnels in the first tunnel group are associated with each other.

20. The method according to claim 19, wherein the operation of mapping the first tunnel group for a first data flow group comprises: the first tunnel group comprises a third tunnel; wherein
the third tunnel is one of the following: a tunnel mapped by a third data flow, and a tunnel mapped by the third QoS policy;
the third data flow is any data flow comprised in the first data flow group; and
the third QoS policy is any QoS policy comprised in the first QoS policy group.

21. The method according to claim 17, wherein the operation of mapping the first tunnel group for a first QoS policy group comprises: the first tunnel group comprises a third tunnel; wherein
the third tunnel is one of the following: a tunnel mapped by a third data flow, and a tunnel mapped by the third QoS policy;
the third data flow is any data flow comprised in the first data flow group; and
the third QoS policy is any QoS policy comprised in the first QoS policy group.

22. A service processing method, comprising:
sending, by a fourth communication device, second information; wherein
the second information comprises at least one of the following: a first request message, and first request information;
the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group; and
the first request information comprises at least one of the following: coordination requirement information of a first data flow, and coordination requirement information of a first data flow group;
the coordination requirement information of the first data flow comprises at least one of the following:
description information of the first data flow;
information of a terminal to which the first data flow corresponds;
a QoS parameter requested by the first data flow;
information of the second data flow;
a time difference interval for approximate time scheduling between the first data flow and the second data flow;
fourth indication information, wherein the fourth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow; and
the coordination requirement information of the first data flow group comprises at least one of the following:
identifier information of the first data flow group, or a list composed of respective data flow identification information of all data flows in the first data flow group;
fifth indication information, wherein the fifth indication information is used to indicate at least one of the following: mapping an independent tunnel for a data flow in the first data flow group, mapping an independent QoS policy for a data flow in the first data flow group, and performing approximate time scheduling for a data flow in the first data flow group;
a list composed of information of a third data flow; and
a time difference interval for approximate time scheduling for a data flow in the first data flow group; wherein
the second data flow is a data flow associated with the first data flow; and
the third data flow is a data flow comprised in the first data flow group.

23. The method according to claim 22, wherein the first request information is comprised in the first request message.

24. The method according to claim 22, wherein
the information of the second data flow comprises at least one of the following: description information of the second data flow, information of a terminal to which the second data flow corresponds, and a QoS parameter requested by the second data flow; and/or
the information of the third data flow comprises at least one of the following: description information of the third data flow, information of a terminal to which the third data flow corresponds, a QoS parameter requested by the third data flow, and eleventh indication information; wherein the eleventh indication information is used to indicate at least one of the following: mapping an independent tunnel for the third data flow, and mapping an independent QoS policy for the third data flow.

25. The method according to claim 22, wherein any two or more data flows in the first data flow group correspond to one of the following: the same terminal, different terminals, the same application server, and different application servers.

26. The method according to claim 22, wherein
the data flow identification information comprises at least one of the following: description information of the data flow, and information of a terminal to which the data flow corresponds.

27. A service processing method, comprising:
obtaining, by a fifth communication device, first information, wherein the first information comprises at least one of the following: coordination configuration information of a first radio bearer, and coordination configuration information of a first radio bearer group; and
performing, by the fifth communication device, a fifth operation based on the first information; wherein
the coordination configuration information of the first radio bearer comprises at least one of the following: an identifier of the first radio bearer, information of a second radio bearer, third indication information, and a time difference interval for approximate time scheduling; wherein the third indication information is used to indicate at least one of the following: requiring approximate time scheduling for the first radio bearer and the second radio bearer;
the coordination configuration information of the first radio bearer group comprises at least one of the following:
identifier information of the first radio bearer group, or a list composed of respective radio bearer identification information of all radio bearers in the first radio bearer group;
information of a first tunnel group mapped by the first radio bearer group;
fourth indication information, wherein the fourth indication information is used to indicate at least one of the following: a radio bearer in the first radio bearer group that requires approximate time scheduling;
a time difference interval for approximate time scheduling; and
information of a third radio bearer;
wherein the second radio bearer is one of the following: a radio bearer associated with the first radio bearer, and a radio bearer that requires approximate time scheduling together with the first radio bearer; and
the third radio bearer is any radio bearer mapped by the first radio bearer group; and
the fifth operation comprises at least one of the following:
requesting approximate time scheduling on data in an associated radio bearer;
adding information of the first tunnel group to which a radio bearer is mapped to a header of a data packet in the radio bearer; and
adding information of the first radio bearer group to which a radio bearer corresponds to a header of a data packet in the radio bearer.

28. The method according to claim 27, wherein the information of the first tunnel group comprises at least one of the following:
identifier information of the first tunnel group, or a list composed of respective tunnel identification information of all tunnels in the first tunnel group;
indication information used to indicate at least one of the following: performing approximate time scheduling on data in the first tunnel group.

29. The method according to claim 27, wherein the information of the first radio bearer group comprises at least one of the following:
identifier information of the first radio bearer group, or a list composed of respective radio bearer identification information of all radio bearers in the first radio bearer group;
indication information used to indicate at least one of the following: performing approximate time scheduling on data in the first radio bearer group.

30. A service processing apparatus, comprising:
a first obtaining module, configured to obtain coordination configuration information, wherein the coordination configuration information comprises at least one of the following: coordination configuration information of a first tunnel, coordination configuration information of a second tunnel, and coordination configuration information of a first tunnel group; and
a first execution module, configured to perform a first operation based on the coordination configuration information;
wherein the coordination configuration information of the first tunnel comprises at least one of the following: an identifier of the first tunnel, a quality of service QoS parameter of the first tunnel, information of a second tunnel, first indication information, and a time difference interval for approximate time scheduling; and
the first indication information is used to indicate at least one of the following: mapping different radio bearers for the first tunnel and the second tunnel, mapping an independent radio bearer for the first tunnel, and requiring approximate time scheduling for the first tunnel and the second tunnel;
the coordination configuration information of the first tunnel group comprises at least one of the following:
identifier information of the first tunnel group, or a list composed of respective tunnel identification information of all tunnels in the first tunnel group;
second indication information, wherein the second indication information is used to indicate at least one of the following: mapping an independent radio bearer for a data flow in the first tunnel group, mapping an independent radio bearer for a tunnel in the first tunnel group, and requiring approximate time scheduling for a tunnel in the first tunnel group;
a time difference interval for approximate time scheduling; and
a list composed of information of a third tunnel; wherein
the second tunnel is one of the following: a tunnel associated with the first tunnel, and a tunnel that requires approximate time scheduling together with the first tunnel; and
the third tunnel is a tunnel comprised in the first tunnel group; and
the first operation comprises at least one of the following:
determining a radio bearer for a tunnel;
determining an association relationship of a radio bearer;
performing approximate time scheduling on data in an associated radio bearer;
requesting approximate time scheduling on data in an associated radio bearer;
sending first information, wherein the first information comprises at least one of the following: coordination configuration information of the first radio bearer, and coordination configuration information of a first radio bearer group.

31. A service processing apparatus, comprising:
a second obtaining module, configured to obtain second information, wherein the second information comprises at least one of the following: a first request message, and first request information; and
a second execution module, configured to perform a second operation based on the second information; wherein
wherein the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group; and
the first request information comprises at least one of the following: coordination requirement information of a first data flow, and coordination requirement information of a first data flow group;
the coordination requirement information of the first data flow comprises at least one of the following:
description information of the first data flow;
information of a terminal to which the first data flow corresponds;
a QoS parameter requested by the first data flow;
information of the second data flow;
a time difference interval for approximate time scheduling between the first data flow and the second data flow;
sixth indication information, wherein the sixth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow; and
the coordination requirement information of the first data flow group comprises at least one of the following:
identifier information of the first data flow group, or a list composed of respective data flow identification information of all data flows in the first data flow group;
seventh indication information, wherein the seventh indication information is used to indicate at least one of the following: mapping an independent tunnel for a data flow in the first data flow group, mapping an independent QoS policy for a data flow in the first data flow group, and performing approximate time scheduling for a data flow in the first data flow group;
a list composed of information of a third data flow; and
a time difference interval for approximate time scheduling for a data flow in the first data flow group; wherein
the second data flow is a data flow associated with the first data flow; and
the third data flow is a data flow comprised in the first data flow group; and
the second operation comprises at least one of the following:
determining a QoS policy for a data flow;
mapping a first QoS policy group for the first data flow group; and
sending third information, wherein the third information comprises at least one of the following: a first QoS policy, and a first QoS policy group.

32. A service processing apparatus, comprising:
a third obtaining module, configured to obtain third information, wherein the third information comprises at least one of the following: a first QoS policy, and a first QoS policy group; and
a third execution module, configured to perform a third operation based on the third information; wherein
the first QoS policy comprises at least one of the following: an identifier of the first QoS policy; a QoS parameter of the first QoS policy, information of a second QoS policy, information of a second data flow, eighth indication information, and a time difference interval for approximate time scheduling; wherein the eighth indication information is used to indicate at least one of the following: mapping different tunnels for the first QoS policy and the second QoS policy, and mapping an independent tunnel for the first QoS policy;
information of the first QoS policy group comprises at least one of the following:
identifier information of the first QoS policy group, or a list composed of respective QoS policy identification information of all QoS policies in the first QoS policy group;
ninth indication information, wherein the ninth indication information is used to indicate at least one of the following: mapping an independent tunnel for a data flow in the first QoS policy group, mapping an independent tunnel for a QoS policy in the first QoS policy group, performing approximate time scheduling for a data flow in the first QoS policy group, and requiring approximate time scheduling for a QoS policy in the first QoS policy group;
a time difference interval for approximate time scheduling; and
a list composed of information of a third QoS policy; wherein
the second QoS policy is a QoS policy associated with the first QoS policy;
the third QoS policy is a QoS policy comprised in the first QoS policy group; and
the second data flow is a data flow on which the first data flow depends; and
the third operation comprises at least one of the following:
determining a tunnel for a data flow;
determining a tunnel for a QoS policy;
determining an association relationship of a tunnel;
sending coordination configuration information, wherein the coordination configuration information comprises at least one of the following: coordination configuration information of a first tunnel, coordination configuration information of a second tunnel, and coordination configuration information of a first tunnel group.

33. A service processing apparatus, comprising:
a sending module, configured to send third information;
wherein the second information comprises at least one of the following: a first request message, and first request information;
the first request message is used to request at least one of the following: policy authorization, a QoS request, performing a QoS request for a data flow, mapping different tunnels for a first data flow and a second data flow, mapping different QoS policies for a first data flow and a second data flow, performing approximate time scheduling for a first data flow and a second data flow, mapping an independent tunnel for a first data flow, mapping an independent QoS policy for a first data flow, mapping an independent tunnel for a data flow in a first data flow group, mapping an independent QoS policy for a data flow in a first data flow group, and performing approximate time scheduling for a data flow in a first data flow group; and
the first request information comprises at least one of the following: coordination requirement information of a first data flow, and coordination requirement information of a first data flow group;
wherein the coordination requirement information of the first data flow comprises at least one of the following:
description information of the first data flow;
information of a terminal to which the first data flow corresponds;
a QoS parameter requested by the first data flow;
information of the second data flow;
a time difference interval for approximate time scheduling between the first data flow and the second data flow;
fourth indication information, wherein the fourth indication information is used to indicate at least one of the following: mapping different tunnels for the first data flow and the second data flow, mapping different QoS policies for the first data flow and the second data flow, performing approximate time scheduling for the first data flow and the second data flow, mapping an independent tunnel for the first data flow, and mapping an independent QoS policy for the first data flow; and
the coordination requirement information of the first data flow group comprises at least one of the following:
identifier information of the first data flow group, or a list composed of respective data flow identification information of all data flows in the first data flow group;
fifth indication information, wherein the fifth indication information is used to indicate at least one of the following: mapping an independent tunnel for a data flow in the first data flow group, mapping an independent QoS policy for a data flow in the first data flow group, and performing approximate time scheduling for a data flow in the first data flow group;
a list composed of information of a third data flow; and
a time difference interval for approximate time scheduling for a data flow in the first data flow group;
wherein the second data flow is a data flow associated with the first data flow; and
the third data flow is a data flow comprised in the first data flow group.

34. A service processing apparatus, comprising:
a fourth obtaining module, configured to obtain first information, wherein the first information comprises at least one of the following: coordination configuration information of a first radio bearer, and coordination configuration information of a first radio bearer group; and
a fourth execution module, configured to perform a fifth operation based on the first information;
wherein the coordination configuration information of the first radio bearer comprises at least one of the following: an identifier of the first radio bearer, information of a second radio bearer, third indication information, and a time difference interval for approximate time scheduling; wherein the third indication information is used to indicate at least one of the following: requiring approximate time scheduling for the first radio bearer and the second radio bearer;
the coordination configuration information of the first radio bearer group comprises at least one of the following:
identifier information of the first radio bearer group, or a list composed of respective radio bearer identification information of all radio bearers in the first radio bearer group;
information of a first tunnel group mapped by the first radio bearer group;
fourth indication information, wherein the fourth indication information is used to indicate at least one of the following: a radio bearer in the first radio bearer group that requires approximate time scheduling;
a time difference interval for approximate time scheduling; and
information of a third radio bearer;
wherein the second radio bearer is one of the following: a radio bearer associated with the first radio bearer, and a radio bearer that requires approximate time scheduling together with the first radio bearer; and
the third radio bearer is any radio bearer mapped by the first radio bearer group; and
the fifth operation comprises at least one of the following:
requesting approximate time scheduling on data in an associated radio bearer;
adding information of the first tunnel group to which a radio bearer is mapped to a header of a data packet in the radio bearer; and
adding information of the first radio bearer group to which a radio bearer corresponds to a header of a data packet in the radio bearer.

35. A communication device, comprising a processor and a memory, wherein the memory stores a program or instructions capable of running on the processor, and when the program or the instructions are executed by the processor, the steps of the sensing service processing method according to any one of claims 1 to 6 are implemented, the steps of the sensing service processing method according to any one of claims 7 to 12 are implemented, the steps of the sensing service processing method according to any one of claims 13 to 21 are implemented, the steps of the sensing service processing method according to any one of claims 22 to 26 are implemented, or the steps of the sensing service processing method according to any one of claims 27 to 29 are implemented.

36. A readable storage medium, wherein the readable storage medium stores a program or instructions; and when the program or the instructions are executed by a processor, the steps of the sensing service processing method according to any one of claims 1 to 6 are implemented, the steps of the sensing service processing method according to any one of claims 7 to 12 are implemented, the steps of the sensing service processing method according to any one of claims 13 to 21 are implemented, the steps of the sensing service processing method according to any one of claims 22 to 26 are implemented, or the steps of the sensing service processing method according to any one of claims 27 to 29 are implemented.
